# EUROPÄISCHE PATENTSCHRIFT

(11) **EP 1 510 553 B1**
(45) Veröffentlichungstag und Bekanntmachung des Hinweises auf die Patenterteilung: **08.11.2006**
(21) Anmeldenummer: 04019173.6
(22) Anmeldetag: 12.08.2004
(51) Int. Cl.: C08L 83/04, C09J 183/04, C09D 183/04

(54) **Selbsthaftende additionsvernetzende Siliconzusammensetzungen**
Self adhesive addtion-curable polysiloxane compositions.
Compositions de polysiloxane auto-adhérent et durcissable par addition.

(30) Priorität: 21.08.2003 DE 10338478
(43) Veröffentlichungstag der Anmeldung: 02.03.2005
(73) Patentinhaber: Wacker Chemie AG, 81737 München (DE)
(72) Erfinder: Fehn, Armin, Dr., 84561 Mehring (DE); Müller, Philipp, Dr., 84489 Burghausen (DE)
(74) Vertreter: Schuderer, Michael

(56) Entgegenhaltungen:
- EP-A- 0 686 671
- EP-B- 1 148 098
- EP-B- 1 266 948
- DE-A- 10 226 626
- US-A- 5 312 855
- US-A- 5 438 094

## Beschreibung

Gegenstand der Erfindung sind selbsthaftende additionsvernetzende Siliconzusammensetzungen, additionsvernetzte Siliconelastomere sowie Verfahren zu ihrer Herstellung.

Bekanntermaßen ist die Haftung additionsvernetzter Siliconelastomere auf zahlreichen Substraten, wie beispielsweise Kunststoffen, Metallen oder Gläsern, gering. Wird beispielsweise eine additionsvernetzende Siliconelastomermasse auf ein Substrat aufgebracht und anschließend vernetzt, kann das entstandene Siliconelastomer in der Regel problemlos, d.h. durch Anwendung geringer Zugkräfte, von der Substratoberfläche abgezogen werden. Häufig wird sogar eine spontane Ablösung des Siliconelastomers vom Substrat festgestellt. Da in zahlreichen Anwendungen jedoch eine feste und dauerhafte Substrathaftung des Siliconelastomers von entscheidender Bedeutung ist, wurde eine Vielzahl spezieller Maßnahmen vorgeschlagen, um eine feste Verbindung zwischen Substrat und Siliconelastomer zu erzielen.

Grundsätzlich kann die Haftfestigkeit des Verbundes zwischen Siliconelastomer und Substrat erhöht werden, indem die chemische und/oder physikalische Beschaffenheit des Substrates bzw. der Substratoberfläche vor dem Aufbringen der additionsvernetzenden Siliconelastomerzusammensetzung in geeigneter Weise verändert wird. Dies kann beispielsweise durch Vorbehandlung der Substratoberfläche mit haftvermittelnden Additiven (sogenannten Primern), Plasmabehandlung der Substratoberfläche, Einmischen spezieller Zusätze in das Substrat, gezielte Einstellung der Morphologie des Substrates oder Erhöhung der Oberflächenrauhigkeit erfolgen. Diese Maßnahmen haben u.a. den Nachteil, dass zusätzliche Verfahrensschritte erforderlich werden oder spezielle Anforderungen an die Beschaffenheit des Substrates gestellt werden müssen.

Des Weiteren kann die Haftfestigkeit des Verbundes zwischen Siliconelastomer und Substrat erhöht werden, indem die chemische und/oder physikalische Beschaffenheit der additionsvernetzenden Siliconelastomermasse gezielt verändert wird. Bekannt sind zahlreiche haftvermittelnde Additive, welche, wenn sie der unvernetzten Siliconmasse beigemischt werden, eine Selbsthaftung des resultierenden Siliconelastomers auf diversen Substraten ermöglichen sollen. Beispielsweise beschreibt die europäische Offenlegungsschrift EP 0 875 536 A2 epoxyfunktionelle Alkoxysilane und/oder Alkoxysiloxane als Haftvermittler. In der Patentschrift US 4,257,936 wirken Additionsprodukte von Acryltrialkoxysilanen mit cyclischen Hydrogenpolisiloxane als Haftvermittler. Das Patent US 4,011,247 offenbart Epoxy-Additionsprodukte von Hydrogenpolysiloxanen, während die Patentschrift US 3,510,001 Alkoxysilan-Additionsprodukte von Triallylisocyanurat offenbart. In US 5,312,855 werden Siloxanverbindungen mit SiH und Alkoxysilyl- oder Glycidyl-Gruppen in Kombination mit einer organischen Verbindung mit 2 oder mehr Allylester-Gruppen als Haftverbesserer beschrieben.

In US 5,438,094 werden selbsthaftende additionsvernetzende Siliconzusammensetzungen offenbart, die spezielle Organohydrogenpolysiloxane als Vernetzer und Verbindungen mit zumindest einer aliphatischen ungesättigten Gruppe und zwei Phenylenskeletten pro Molekül als Haftvermittler enthalten.

Dabei werden Organohydrogensiloxane der allgemeinen Formel (1), (2) oder (3) :

R₃Si(O-SiHR)ₙOSiR₃ (1)

(OSiHR)ₙ-Cyclen (2)

R₄₋₁Si(OSiHR₂)₁ (3)

beansprucht.

In den Formeln (1), (2) und (3) sind die Reste R substituierte oder unsubstituierte einwertige Kohlenwasserstoff-Gruppen, 1 ist 3 oder 4 und n eine ganze Zahl von zumindest 3.

In der Patentschrift US 5,438,094 wird dagegen eine Organopolysiloxan-Komponente als nicht erfindungsgemäß beschrieben, die allgemeine Formel (4) ausweist:

Me₃Si-(SiHMe)₅-(OSiMe₂)₈-SiMe₃ (4).

Die europäische Offenlegungsschrift EP 0 686 671 A2 beschreibt adhesive Siliconzusammensetzungen, die auf organischen Harzen gute Haftung aufweisen, jedoch von metallischen Flächen leicht ablösbar sind. Diese Siliconzusammensetzungen enthalten eine Mischung eine Diorganopolysiloxans und eines Organohydrogenpolysiloxans mit einem Platinkatalysator, der ein Organohydrogensiloxan, das zumindest zwei Si-H-Gruppen pro Molekül und einen einen aromatischen Ring aufweisenden Kohlenwasserstoffrest aufweist, wobei zumindest 12 Mol-% der gesamten monovalenten organischen Reste gebunden an Silicium durch diesen aromatischen Rest gebildet werden, oder eine Verbindung mit zumindest einer Si-H-Gruppe sowie zwei Benzolringen getrennt durch eine -RR'Si-, -RR'SiO-, -O-RR'SiO- oder -RR'SiO-RR'Si-Brücke, worin R und R' monovalente Kohlenwasserstoffreste bedeuten, aufweist.

Die europäische Offenlegungsschrift EP 1 375 622 A1 beschreibt weiterhin additionsvernetzende Siliconzusammensetzungen enthaltend Diorganopolysiloxane, die monovalente,aliphatisch ungesättigte Kohlenwasserstoffreste aufweisen, Organohydrogenpolysiloxane mit durchschnittlich mindestens 3 Si-H-Gruppen pro Molekül, die zumindest einen monovalenten Kohlenwasserstoffrest aufweisend mindestens einen aromatischen C6-Ring und/oder einen halogensubstituierten monovalenten Kohlenwasserstoffrest und/oder einen beidseitig Si-gebundenen bivalenten Kohlenwasserstoffrest aufweisen, Haftvermittler aufweisend zumindest eine aliphatisch ungesättigte Gruppe und zwei Phenylenskelette pro Molekül und einen Hydrosilylierungskatalysator.

Die selbsthaftende additionsvernetzende Siliconkautschukmassen gemäß dem Stand der Technik weisen unter Verwendung der genannten Haftungsadditiven zum Teil verbesserte Haftung an Metallen und manchen organischen Harzen und Kunstoffen aufweisen. Nachteilig ist jedoch, dass diese selbsthaftenden additionsvernetzenden Siliconkautschuken insbesondere gegenüber problematischen Kunststoffen, wie beispielsweise Nylon-, Polycarbonat- und Acrylharzen keine verbesserte Haftung zeigen.

Aufgabe der Erfindung ist es die Nachteile des Standes der Technik zu überwinden und insbesondere die Haftung auf verschiedenen Kunststoffen, wie beispielsweise Nylon-, Polycarbonat- und Acrylharzen, sowie Metallen zu verbessern.

Überraschenderweise wurde gefunden, dass mit der erfindungsgemäßen Siliconzusammensetzung eine selbsthaftende Siliconkautschukmasse erhalten wird, die nicht nur an verschiedenen Metallen, sondern auch an verschiedenen organischen Kunststoffen gut haftet. Insbesondere ist die Haftung auf den allgemein als problematisch geltenden Kunststoffen, wie beispielsweise Nylon-, Polycarbonat- und Acrylharzen, sehr gut.

Gegenstand der Erfindung sind additionsvernetzende Siliconzusammensetzungen enthaltend
(A) Organopolysiloxane enthaltend Einheiten der allgemeinen Formel (I)

   **R**^{**1**} _{**a**}**R**^{**2**} _{**b**}**SiO**_{**(4-a-b)/2**} (I),

   wobei
   - **R**^{**1**}: Hydroxylrest oder einen monovalenten, unsubstituierten oder halogensubstituierten Kohlenwasserstoffrest mit 1 bis 20 Kohlenstoffatomen, der frei von aliphatisch ungesättigten Gruppen ist und in dem einzelne Kohlenstoffatome durch O-, N-, S-, oder P-Atome ersetzt sein können,
   - **R**^{**2**}: einen monovalenten, aliphatisch ungesättigten, unsubstituierten oder halogensubstituierten Kohlenwasserstoffrest mit 1 bis 10 Kohlenstoffatomen, in dem einzelne Kohlenstoffatome durch O-, N-, S-, oder P-Atome ersetzt sein können,
   - **a**: 0, 1, 2 oder 3 und
   - **b**: 0, 1, 2 oder 3 bedeuten,
   mit der Maßgabe, dass die Summe **(a** + **b) ≤** 3 ist, pro Molekül durchschnittlich mindestens zwei aliphatisch ungesättigte Reste **R**^{**2**} enthalten sind und dass die bei 25°C bestimmte Viskosität der Organopolysiloxane (A) 0,001 bis 40.000 Pas beträgt,
(B) Organohydrogenpolysiloxane enthaltend Einheiten der allgemeinen Formel (II)

   **R**^{**3**}_{**c**}**R**^{**4**}_{**d**}**R**^{**5**}_{**e/2**}**H**_{**f**}**SiO**_{**(4-c-d-e-f)/2**} (II),

   wobei
   - **R**^{**3**}: einen monovalenten aliphatisch gesättigten Kohlenwasserstoffrest mit 1 bis 20 Kohlenstoffatomen,
   - **R**^{**4**}: (a) einen monovalenten, unsubstituierten oder halogensubstituierten Kohlenwasserstoffrest mit 6 bis 15 Kohlenstoffatomen, welcher mindestens einen aromatischen C₆-Ring enthält, oder
   (b) einen monovalenten, unsubstituierten oder halogensubstituierten, gesättigten Kohlenwasserstoffrest mit 2 bis 20 Kohlenstoffatomen, in dem einzelne Kohlenstoffatome durch O-, N-, S-, oder P-Atome ersetzt sein können,
   - **R**^{**5**}: einen beidseitig Si-gebundenen bivalenten, unsubstituierten oder halogensubstituierten Kohlenwasserstoffrest mit 6 bis 20 Kohlenstoffatomen bedeutet, in dem einzelne Kohlenstoffatome durch O-, N-, S-, oder P-Atome ersetzt sein können,
   - **c**: 0, 1, 2 oder 3,
   - **d**: 0, 1, 2 oder 3,
   - **e**: 0, 1, 2 oder 3 und
   - **f**: 0, 1, 2 oder 3 bedeuten,
   mit der Maßgabe, dass die Summe (**c**+**d**+2**e**+**f**) ≤ 3 ist, das Organohydrogenpolysiloxan (B) pro Molekül durchschnittlich mindestens 3 SiH-Gruppen enthält und die bei 25°C bestimmte Viskosität des Organohydrogenpolysiloxans (B) 0,0005 bis 100 Pas beträgt,
(C) zumindest einen Haftvermittler der allgemeinen Formel (III): 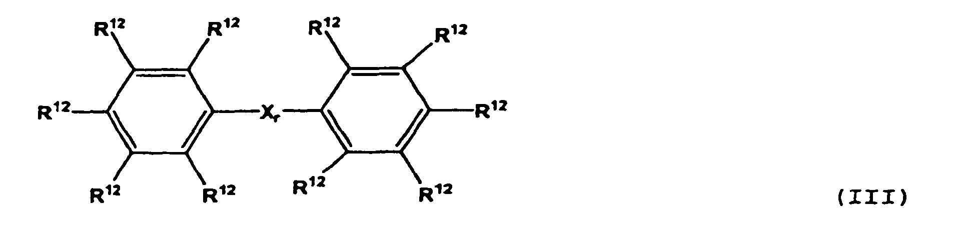 wobei
   - **R**^{**12**}: ein Wasserstoffatom, eine Hydroxylgruppe, ein Halogenatom, eine Alkyl-, Alkenyl-, Alkoxy-, Alkenyloxy- oder Arylgruppe oder eine einwertige organische Gruppe ist, die eine Alkenyl-, Alkoxy-, Glycidyl-, Carbonyl-, Carbonyloxy-, Silyloxy- oder Alkoxysilylgruppe enthält, wobei zumindest einer, der Reste **R**^{**12**} eine Alkenylgruppe oder eine Alkenylgruppe enthaltende, einwertige, organische Gruppe ist, und
   - **X**: -(R¹³-)C(-R¹³)-, -(O=)S(=O)-, -(O=)S-, -C(=O)-, -O-(CH₃-)Si(-CH₃)-O-, -(CH₂)₅- und -O-
   worin
   **R**^{**13**} ein Wasserstoffatom, ein Halogenatom oder eine substituierte oder unsubstituierte Alkyl-, Aryl-, Alkenyl- oder Alkinylgruppe,
   **s** eine positive Zahl von zumindest 2 und
   **r** 0 oder 1 bedeuten,
(D) zumindest einen Haftvermittler der folgenden allgemeinen Formel (IV) 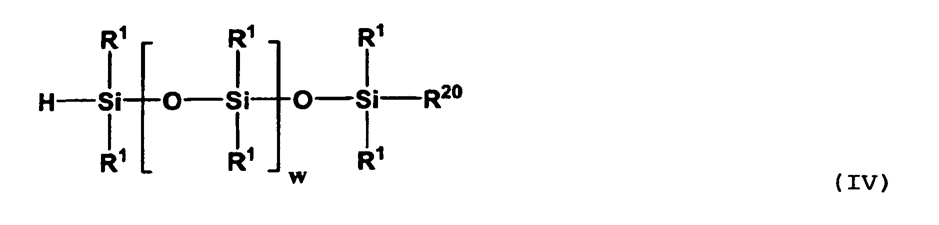 worin
   - **R**^{**1**}: die obenstehende Bedeutung hat, und
   - **R**^{**20**}: einen Hydroxylrest oder ein Wasserstoffatom und
   - **w**: Null oder eine ganze positive Zahl bedeuten,
   mit der Maßgabe, dass **w** ≤ 250 ist und die bei 25°C bestimmte Viskosität des Haftvermittlers (D) 0,0005 bis 2000 mPas beträgt,
   und
(E) zumindest einen Hydrosilylierungskatalysator.

Erst durch die erfindungsgemäße Synergiewirkung der Haftvermittler der allgemeinen Formel (III) und der Haftvermittler der allgemeinen Formel (IV) wird die exzellente Haftung erhalten.

Vorteile zum Stand der Technik sind zum einen eine verbesserte Haftung auf problematischen Kunstoffen, insbesondere Polycarbonat. Insbesondere wird eine verbesserte Haftung auch nach Kontakt des Haftverbunds mit Wasser erzielt.

Der Haftvermittler (C) ist eine Verbindung mit zumindest einer aliphatischen ungesättigten Gruppe und zwei Phenylskeletten pro Molekül. Der Haftvermittler (C) steigert in Kombination mit dem Haftvermittler (D) die Adhäsion der Zusammensetzung enthaltend weiterhin die Komponenten (A) und (B), so dass die Zusammensetzung klebrig wird. Der Haftvermittler (C) enthält vorzugsweise aliphatische, ungesättigte Gruppen, wie beispielsweise Alkenylgruppen, und p-Phenylen-Skelette. Der Haftvermittler (C) weist die allgemeine Formel (III), vorzugsweise die allgemeine Formel (V) auf.

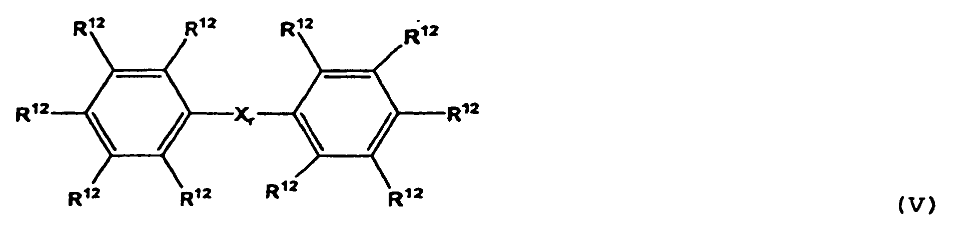

In der allgemeinen Formel (III) bedeutet R¹² jeweils unabhängig von einander ein Wasserstoffatom, eine Hydroxylgruppe, ein Halogenatom, eine Alkyl-, Alkenyl-, Alkoxy-, Alkenyloxy- oder Arylgruppe oder eine einwertige organische Gruppe, die eine Alkenyl-, Alkoxy-, Glycidyl-, Carbonyl-, Carbonyloxy-, Silyloxy- oder Alkoxysilylgruppe enthält. Vorzugsweise bedeutet mindestens ein, vorzugsweise 1 bis 4, Reste R¹² eine Alkenylgruppe oder eine Alkenylgruppe enthaltende, einwertige, organische Gruppe.

**X** wird vorzugsweise aus der Gruppe enthaltend -(R¹³-)C(-R¹³)-, -(O=)S(=O)-, -(O=)S-, -C(=O)-, -O-(CH₃-)Si(-CH₃)-O-, -(CH₂)₅- und -O- ausgewählt, worin **R**^{**13**} jeweils unabhängig von einander für ein Wasserstoffatom, ein Halogenatom oder eine substituierte oder unsubstituierte Alkyl-, Aryl-, Alkenyl- oder Alkinylgruppe steht und **s** eine positive Zahl von zumindest 2, vorzugsweise 2 bis 4, ist. Der Index **r** bedeutet vorzugsweise 0 oder 1.

In **R**^{**12**} und **R**^{**13**} sollten die Alkyl- und Alkyoxygruppen vorzugsweise 1 bis 10 Kohlenstoffatome, besonders bevorzugt 1 bis 8 Kohlenstoffatome, insbesondere bevorzugt 1 bis 6 Kohlenstoffatome, aufweisen. Die Arylgruppe sollte vorzugsweise 6 bis 10 Kohlenstoffatome, bevorzugt 6 bis 8 Kohlenstoffatome, aufweisen. Die Alkenyl-, Alkinyl- und Alkenyloxygruppen sollten vorzugsweise 2 bis 10 Kohlenstoffatome, bevorzugt 2 bis 8 Kohlenstoffatome, besonders bevorzugt 2 bis 6 Kohlenstoffatome, aufweisen. Die einwertige organische Gruppe sollte vorzugsweise 1 bis 12 Kohlenstoffatome, bevorzugt 2 bis 10 Kohlenstoffatome, besonders bevorzugt 2 bis 8 Kohlenstoffatome, aufweisen.

Beispiele für die Alkyl-, Alkenyl- und Arylgruppen sind für Alkylgruppen die Methyl-, Ethyl-, Propyl-, Isopropyl-, Butyl-, *tert*-Butyl-, Hexyl-, Cyclohexyl- und Octylgruppe, für Alkenylgruppen die Vinyl-, Allyl-, Propenyl-, Isopropenyl-, Butenyl-, Hexenyl-, Cyclohexenylgruppe, für Arylgruppen die Phenyl-, Tolyl-, Xylyl-, Aralkylgruppe, wie beispielsweise Benzyl- und Phenylethylgruppe. Beispiele für die Alkinylgruppe umfassen die Acetylengruppe. Beispiele für die Alkoxy- und die Alkenyloxygruppen sind Methoxy-, Ethoxy-, Propoxy- Isopropoxy-, Butoxy-, *tert*-Butoxy-, Methoxyethoxy-, Ethoxyethoxy-, Vinyloxy-, Allyloxy-, Propenoxy-, Isopropenoxy- und Butenoxygruppe.

Bevorzugte Ausführungsformen für die einwertige organische Gruppe, die eine Alkenyl-, Alkoxy-, Glycidyl-, Carbonyl-, Carbonyloxy-, Silyloxy- oder Alkoxysilyl-Gruppe enthält, sind beispielsweise die folgenden Gruppen:

CH₂=C(-R')-C(=O)-O-

worin **R'** ein Wasserstoffatom oder eine Methylgruppe bedeutet,

(R"O)ₓSi(-R"₃₋ₓ)-(CH₂)_{y}-O-

worin **R"** eine einwertige Kohlenwasserstoffgruppe mit 1 bis 6 Kohlenstoffatomen, wie beispielsweise eine Alkylgruppe, eine Alkenylgruppe und eine Arylgruppe, darstellt, **x** 1, 2 oder 3 und **y** eine ganze Zahl von 0 bis 6 ist, 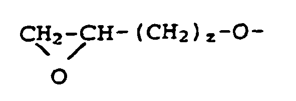 worin **z** eine ganze Zahl von 1 bis 6 ist, und 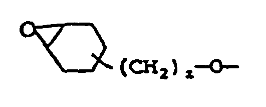 worin **z** eine ganze Zahl von 1 bis 6 ist.

Eine weitere bevorzugte Ausführungsform des Haftvermittler (C) wird durch die allgemeine Formel (VI) dargestellt.

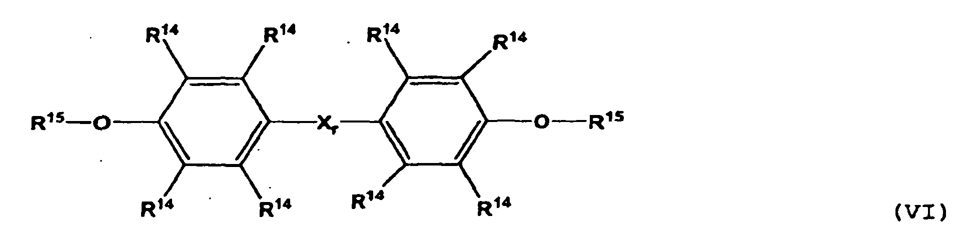

**R**^{**14**} in der allgemeinen Formel (VI) bedeutet jeweils unabhängig von einander Wasserstoffatom, Hydroxylgruppe, Halogenatom, Alkylgruppe mit 1 bis 10 Kohlenstoffatomen, vorzugsweise 1 bis 8 Kohlenstoffatomen, besonders bevorzugt 1 bis 6 Kohlenstoffatomen, oder Alkenylgruppe mit 2 bis 10 Kohlenstoffatomen, vorzugsweise 2 bis 8 Kohlenstoffatomen, besonders bevorzugt 2 bis 6 Kohlenstoffatomen. **R**^{**15**} steht ebenfalls jeweils unanhängig von einander für eine Alkenylgruppe mit 2 bis 12, vorzugsweise 2 bis 10, Kohlenstoffatomen, einwertige organische Gruppe, die eine Alkenylgruppe mit 2 bis 12, vorzugsweise 2 bis 10, Kohlenstoffatomen enthält, oder -R¹⁶ₜ-SiR¹⁷ oder -CO-R¹⁷. **R**^{**16**} ist eine Alkylengruppe mit 1 bis 6 Kohlenstoffatomen, vorzugsweise 1 bis 4 Kohlenstoffatomen. Der Buchstabe **t** steht für 0 oder 1. **R**^{**17**} ist eine Alkylgruppe mit 1 bis 6 Kohlenstoffatomen, eine Alkenylgruppe mit 2 bis 6 Kohlenstoffatomen oder eine Alkoxygruppe mit 1 bis 6 Kohlenstoffatomen.

Mindestens einer der Reste **R**^{**15**} sollte vorzugsweise eine Alkenylgruppe oder eine einwertige organische Gruppe sein, die eine Alkenylgruppe enthält.

**X** und **r** haben die oben angeführte Bedeutung.

Beispiele für die Alkyl-, Alkenyl- und die eine Alkenylgruppe enthaltende, einwertige organische Gruppe sind dieselben, wie für **R**^{**12**} angegeben.

Bevorzugte Ausführungsformen für die Alkylengruppe beinhalten beispielsweise die Methylen-, Ethylen-, Trimethylen-, Tetramethylen-, Hexamethylen- und Methylethylengruppe.

Besonders bevorzugte Ausführungsformen des Haftvermittlers (C) der allgemeinen Formel (VI) sind: 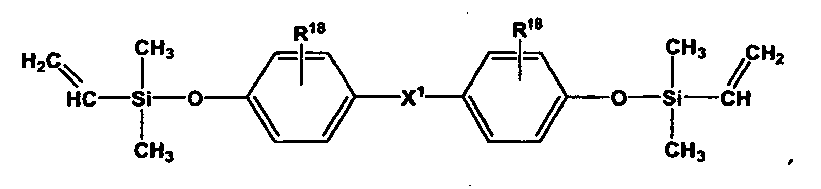 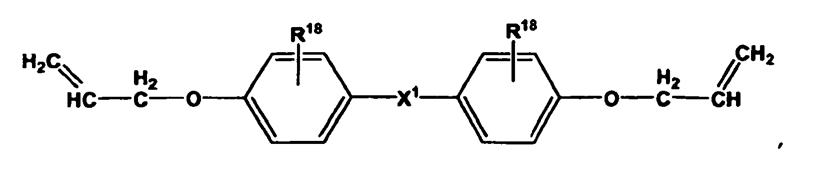 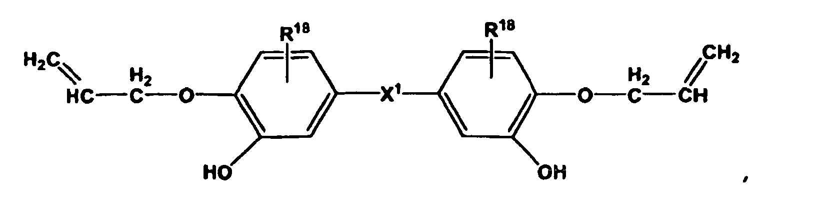 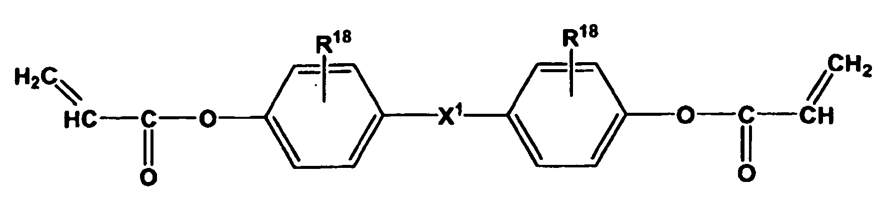 und 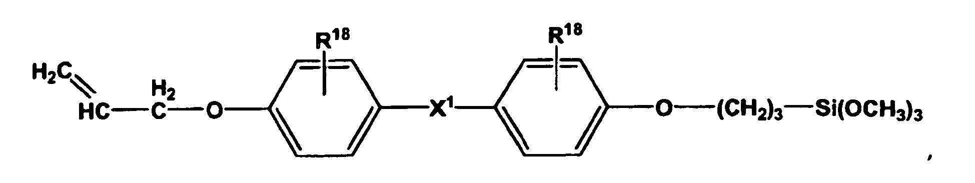 worin **X**^{**1**} -O-, -CH₂, -(CH₃-)C(-CH₃)- oder -O-(CH₃-)Si(-CH₃)-O-, und **R**^{**18**} jeweils unabhängig von einander ein Wasserstoffatom, eine Vinylgruppe oder eine Allylgruppe bedeuten.

Für die Wirksamkeit des erfindungsgemäßen Haftvermittlers (D) ist es wesentlich, dass dieser nur endständige Si-H-Gruppen, wie beispielsweise Si(CH₃)₂H-Gruppen, aufweist und frei von kettenständigen Si-H-Gruppen ist. Nur dann wird eine optimale Haftung beobachtet.

Bevorzugte Reste **R**^{**1**} für den Haftvermittler (D) sind Methyl-, Phenyl-, Phenylen- und 3,3,3-Triflourpropylgruppen, wobei die Methyl- und Phenylreste besonders bevorzugt sind.

In der allgemeinen Formel (IV) ist **w** eine ganze Zahl von höchstens 250, bevorzugt höchstens 50. Besonders bevorzugt ist **w** eine ganze Zahlen von 3 bis 60, insbesondere bevorzugt von 3 bis 15. Die insbesondere bevorzugten Werte für **w** ergeben sich daraus, dass für diese Werte der größte Effekt, also die beste Haftung, beobachtet wird. Dies liegt zum einen daran, dass für **w** größer gleich 3 der Siedpunkt des Haftvermittlers (D) bereits so groß ist, dass er sich nicht vor der eigentlichen Reaktion verflüchtigt und zum andern ist mit **w** kleiner gleich 15 der Haftvermittler (D) kurz genug, um in der Siliconmasse sehr beweglich zu sein und bei der Haftungsreaktion schnell an die Oberfläche der Siliconmasse zu gelangen, um dort mit dem Substrat, dem Haftvermittler (C) und gegebenenfalls dem Organohydrogenpolysiloxan (B) die Haftung aufzubauen, wobei überraschenderweise auch eine Haftung auf Polycarbonat erzielt werden konnte.

Bevorzugte Ausführungsformen des erfindungsgemäßen Haftvermittlers (D) sind beispielsweise Copolymere, enthaltend (Ph)₂SiO- und (CH₃)₂SiO-Einheiten oder (Ph) (CH₃)SiO- und (CH₃)₂SiO-Einheiten oder -OSi-C₆H₄-SiO- und (CH₃)₂SiO-Einheiten, wobei diese Copolymere jeweils bevorzugt H(CH₃)₂SiO-Endgruppen aufweisen, sowie Homopolymere enthaltend (CH₃)₂SiO-Einheiten und aufweisend H(CH₃)₂SiO-Endgruppen.

Insbesondere werden Verbindungen mit den mittleren Zusammensetzungen, die beispielsweise mittels ²⁹Si-NMR-Spektrum bestimmt wird, H(CH₃)₂Si-O-(Si(CH₃)₂-O)ₙ-OSi(CH₃)₂H mit n = 5, 6, 8, 10 oder 12, H(CH₃)₂Si-O-(Si(Ph)(CH₃)-O)-(Si(CH₃)₂-O)₅₋OSi(CH₃)₂H und H(CH₃)₂Si-O-(-Si(Ph)(CH₃)-O)₃-(Si(CH₃)₂-O)₈₋OSi(CH₃)₂H als Haftvermittler (D) bevorzugt.

Die Komponenten (A), (B), (C) und (D) können jeweils eine einzige Verbindung oder beliebige Mischungen verschiedener Verbindungen der jeweiligen Komponente enthalten.

Bevorzugte Reste **R**^{**1**} sind jeweils unabhängig von einander Alkylreste, wie beispielsweise Methyl-, Ethyl-, Propyl-, Isopropyl-, *tert*.-Butyl-, n-Pentyl-, *iso*-Pentyl-, *neo*-Pentyl-, *tert*.-Pentyl-, n-Octyl-, 2-Ethylhexyl-, 2,2,4-Trimethylpentyl-, n-Nonyl- und Octadecylrest, Cycloalkylreste, wie beispielsweise Cyclopentyl-, Cyclohexyl-, Cycloheptyl-, Norbornyl-, Adamantylethyl- oder Bornylrest, Aryl- oder Alkarylreste, wie beispielsweise Phenyl-, Ethylphenyl-, Tolyl-, Xylyl-, Mesityl- oder Naphthylrest, Aralkylreste, wie beispielsweise Benzyl-, 2-Phenylpropyl- oder Phenylethylrest, sowie halogenierte und mit organischen Gruppen funktionalisierte Derivate der voranstehenden Reste, wie beispielsweise 3,3,3-Trifluorpropyl-, 3-Iodopropyl-, 3-Isocyanatopropyl-, Aminopropyl-, Methacryloxymethyl- oder Cyanoethylrest. Bevorzugte Reste **R**^{**1**} enthalten 1 bis 10 Kohlenstoffatome und sind gegebenenfalls mit Halogen substituiert. Besonders bevorzugte Reste **R**^{**1**} sind Methyl-, Phenyl- und 3,3,3-Trifluorpropylrest, insbesondere der Methylrest.

Die Reste **R**^{**2**} sind bevorzugt einer Hydrosilylierungsreaktion zugänglich. Beispiele hierfür sind Alkenyl- und Alkinylreste, wie beispielsweise Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest, Cycloalkenylreste, wie beispielsweise Cyclopentenyl-, Cyclohexenyl-, 3-Cyclohexenylethyl-, 5-Bicycloheptenyl-, Norbornenyl-, 4-Cyclooctenyl- oder Cyclooctadienylrest, Alkenylarylreste, wie beispielsweise Styryl- oder Styrylethylrest, sowie halogenierte und Heteroatome enthaltende Derivate der voranstehenden Reste, wie beispielsweise 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste **R**^{**2**} sind Vinyl-, Allyl- und 5-Hexenylrest, insbesondere der Vinylrest.

Bei den Diorganopolysiloxanen (A) der allgemeinen Formel (I) beträgt die bei 25°C bestimmte Viskosität vorzugsweise 0,1 bis 30.000 Pas. Besonders bevorzugt ist der Viskositätsbereich von 1 bis 30.000 Pas. Je nach Art der additionsvernetzenden Masse, werden unterschiedliche Viskositätsbereiche besonders bevorzugt. Für die bei Raumtemperatur vernetzenden zweikomponentigen Massen (RTV-2) werden Viskositäten von 0,1 bis 10 Pas besonders bevorzugt, für die flüssigen Siliconkautschukmassen (LSR) von 1 bis 100 Pas und für die Hochtemperatur vernetzenden Massen (HTV) von 2.000 bis 40.000 Pas.

Beispiele für **R**^{**3**} sind Alkylreste, wie beispielsweise Methyl-, Ethyl-, Propyl-, Isopropyl-, *tert.*-Butyl-, n-Octyl-, 2-Ethylhexyl- und Octadecylrest, sowie Cycloalkylreste, wie beispielsweise Cyclopentyl-, Cyclohexyl-, Norbornyl- oder Bornylrest. Bevorzugte Reste **R**^{**3**} sind Kohlenwasserstoffreste mit 1 bis 10 Kohlenstoffatomen. Besonders bevorzugter Rest **R**^{**3**} ist der Methylrest.

Beispiele für **R**^{**4**} sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie beispielsweise o-, m- oder p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-*tert*.-Butylphenoxypropyl-, 4-Nitrophenyl-, Chinolinyl- oder Pentafluorbenzoyloxyrest.

Beispiele für Kohlenwasserstoffreste **R**^{**4**} mit 2 bis 20 Kohlenstoffatomen sind Reste, wie beispielsweise 3-Chlorpropyl-, 3-Brompropyl-, 3,3,3-Trifluorpropyl-, 2-Fluorethyl-, 1,1-Dihydroperfluordodecyl- oder der 2-Cyanoethylrest.

Besonders bevorzugte Reste **R**^{**4**} sind der Phenylrest und der 3,3,3-Trifluorpropylrest.

Bevorzugte Reste **R**^{**5**}**,** entsprechen der allgemeinen Formel (VII)

-(O)ₛ-(R⁶)ₜ-(O)ᵤ-(X)_{w}-(O)ᵤ-(R⁶)ₜ-(O)ₛ- (VII),

wobei
**s, t, u** und **w** unabhängig voneinander die Werte 0, 1 oder 2 sind, die Reste **R**^{**6**} gleich oder verschieden sein können und einen bivalenten, unsubstituierten oder mit Halogen substituierten Kohlenwasserstoffrest mit 1 bis 10 Kohlenstoffatome, der frei ist von aliphatisch ungesättigten Gruppen und in dem einzelne Kohlenstoffatome durch O-, N-, S-, oder P-Atome ersetzt sein können, wie beispielsweise -CH₂-, -CH₂-CH₂-, -CH₂-CH₂-CH₂-, -CF₂₋, -CH₂-CF₂-, -CH₂-CH(CH₃)-, -C(CH₃)₂-, -CH₂-C(CH₃)₂-, -C(CH₃)₂-CH₂₋, -CH₂-CH₂-O- oder -CF₂-CF₂-O-, und **X** einen bivalenten Rest, wie -Ph-, -Ph-O-Ph-, -Ph-S-Ph-, -Ph-SO₂-Ph-, -Ph-CH₂-Ph-, -Ph-C(CH₃)₂-Ph-, -Ph-C(CF₃)₂-Ph-, -Ph-C(O)-Ph-, Cyclohexylen oder Norbornylen, wobei **Ph** eine Phenylengruppe bezeichnet, bedeuten.

Besonders bevorzugter Rest **R**^{**5**} ist der Phenylenrest.

Als Organohydrogenpolysiloxane (B) der allgemeinen Formel (II) sind lineare, verzweigte und cyclische Organohydrogenpolysiloxane bevorzugt. Die cyclischen Organohydrogenpolysiloxane bestehen bevorzugt aus Einheiten der Formeln H(CH₃)SiO_{2/2}, (CH₃)(C₆H₅)SiO_{2/2}, (C₆H₅)₂SiO_{2/2} oder (CH₃)₂SiO_{2/2} sowie deren Mischungen. Die linearen und verzweigten Organohydrogenpolysiloxane sind vorzugsweise aus Einheiten der Formeln (CH₃)₃SiO_{1/2}, H(CH₃)₂SiO_{1/2}, H(CH₃)SiO_{2/2}, (CH₃)(C₆H₅)SiO_{2/2}, (C₆H₅)₂SiO_{2/2}, (C₆H₅)SiO_{3/2}, (C₆H₅)SiO_{3/2}, (CH₃)₂SiO_{2/2} oder O_{1/2} (CH₃) ₂Si-C₆H₄- (CH₃) ₂SiO_{1/2} oder deren Mischungen zusammengesetzt, wobei pro Molekül bevorzugt 0 bis 18, besonders bevorzugt 1 bis 18 Molprozent aller Si-gebundener organischer Reste aus Phenylgruppen und Phenylengruppen bestehen.

Als Organohydrogenpolysiloxane (B) der allgemeinen Formel (II) sind lineare und verzweigte Organohydrogenpolysiloxane besonders bevorzugt. Die linearen und verzweigten Organohydrogenpolysiloxane sind besonders bevorzugt aus Einheiten der Formeln (CH₃)₃SiO_{1/2}, H(CH₃)SiO_{2/2,} (CH₃) (C₆H₅)SiO_{2/2,} (C₆H₅)₂SiO_{2/2,} (C₆H₅)SiO_{3/2}, (C₆H₅)SiO_{3/2} und (CH₃)₂SiO_{2/2} sowie deren Mischungen zusammengesetzt, wobei pro Molekül besonders bevorzugt 3 bis 7 Molprozent aller Si-gebundener organischer Reste aus Phenylgruppen bestehen.

Das Organohydrogenpolysiloxan (B) enthält pro Molekül vorzugsweise 5 bis 40 SiH-Gruppen. Die bei 25°C gemessene Viskosität des Bestandteils (B) beträgt vorzugsweise 0,002 bis 1 Pas.

Aufgrund der Labilität der SiH-Gruppe kann der Bestandteil (B) herstellungsbedingt einen geringen Gehalt, typischerweise kleiner 100 Gew.-ppm, Si-gebundener OH-Gruppen aufweisen.

Bevorzugte Ausführungen der Organohydrogenpolysiloxane (B) sind beispielsweise Copolymere enthaltend (Ph)₂SiO- und (CH₃)HSi-Einheiten aufweisend (CH₃)₃SiO_{1/2}-Endgruppen, Copolymere enthaltend (Ph)₂SiO-, (CH₃)₂SiO- und (CH₃)HSi-Einheiten, Copoylmere enthaltend (Ph)SiO_{3/2}-, (CH₃)₂SiO- und (CH₃)HSi-Einheiten, Copolymere enthaltend (Ph)(CH₃)SiO-, (CH₃)₂SiO- und (CH₃)HSi-Einheiten, Copolymere enthaltend (Ph)(CH₃)SiO- und (CH₃)HSi-Einheiten, Copolymere enthaltend -OSi-C₆H₄-SiO-, (CH₃)₂SiO- und (CH₃)HSi-Einheiten und Copolymere enthaltend - OSi-C₆H₄-SiO- und (CH₃)HSi-Einheiten.

Weiterhin sind Organohydrogenpolysiloxane (B) bevorzugt, die eine mittlere Zusammensetzung, welche beispielsweise mittels ²⁹Si-NMR-Spektroskopie bestimmt werden kann, (CH₃)₃Si-O-(-Si(Ph)(CH₃)-O)₃-(Si(CH₃)H-O)₁₀-OSi(CH₃)₃, (CH₃)₃Si-O-(-Si (Ph)(CH₃)-O)₃-(-Si(CH₃)₂-O)₃-(Si(CH₃)H-O)₁₀-OSi(CH₃)₃ oder (CH₃)₃Si-O-(-Si(Ph) (CH₃)-O)₃-(-Si(CH₃)₂-O)₃-(Si(CH₃)H-O)₁₀₋OSi(CH₃)₃ aufweisen sowie Copolymere bestehend aus -Si(Ph)-O_{3/2}-, - Si(CH₃)H-O- und -Si(CH₃)₂-O-Einheitem mit einem Molverhältnis von 2 : 17: 4 aufweisend (CH₃)₃Si-O-Endgruppen.

Bevorzugt ist eine erfindungsgemäße Zusammensetzung enthaltend 100 Gew.-Teile Diorganopolysiloxane (A) der allgemeinen Formel (I), 0,1 bis 50 Gew.-Teile Organohydrogenpolysiloxan (B) der allgemeinen Formel (II), 0,1 bis 15 Gew.-Teile des organischen Haftvermittlers (C) der allgemeinen Formel (III), 0,01 bis 15 Gew.-Teile des SiH-Gruppen enthaltenden Haftvermittlers (D) der allgemeinen Formel (IV) und katalytische Menge zumindest eines Hydrosilylierungskatalysators (E) sowie gegebenenfalls 0 bis 100 Gew.-Teile eines verstärkenden Füllstoffs (F), 0 bis 5 Gew.-Teile eines Inhibitors (G) und 0 bis 60 Gewichtsteile weiterer Zusatzstoffe (H).

Besonders bevorzugt ist eine Zusammensetzung enthaltend 100 Gew.-Teile Diorganopolysiloxane (A) der allgemeinen Formel (I), 0,5 bis 10 Gew.-Teile Organohydrogenpolysiloxan (B) der allgemeinen Formel (II), 0,5 bis 7 Gew.-Teile Haftvermittler (C) der allgemeinen Formel (III), 0,2 bis 5 Gew.-Teile Haftvermittler (D) der allgemeinen Formel (IV) und katalytische Menge zumindest eines Hydrosilylierungskatalysators (E) sowie gegebenenfalls 10 bis 45 Gew.-Teile eines verstärkenden Füllstoffs (F), 0,01 bis 0,5 Gew.-Teile eines Inhibitors (G) und 0 bis 60 Gewichtsteile weiterer Zusatzstoffe (H).

Der Hydrosilylierungskatalysator (E) dient als Katalysator für die als Hydrosilylierung bezeichnete Additionsreaktion zwischen den aliphatisch ungesättigten Kohlenwasserstoffresten **R**^{**2**} der Diorganopolysiloxane (A) der allgemeinen Formel (I) und den siliciumgebundenen Wasserstoffatomen der Organohydrogenpolysiloxane (B) der allgemeinen Formel (II). Im Stand der Technik sind zahlreiche geeignete Hydrosilylierungskatalysatoren bekannt. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (E) können vorzugsweise Metalle, wie beispielsweise Platin, Rhodium, Palladium, Ruthenium und Iridium, vorzugsweise Platin, sowie deren Verbindungen eingesetzt werden. Die Metalle können gegebenenfalls auf feinteiligen Trägermaterialien, wie Aktivkohle, Metalloxiden, wie Aluminiumoxid oder Siliciumdioxid, fixiert sein.

Vorzugsweise werden Platin und Platinverbindungen verwendet. Besonders bevorzugt werden solche Platinverbindungen, die in Polyorganosiloxanen löslich sind, verwendet. Als lösliche Platinverbindungen können beispielsweise die Platin-Olefin-Komplexe der Formeln PtCl₂(Olefin)₂ und HPtCl₃(Olefin) verwendet werden, wobei bevorzugt als Olefin vorzugsweise Alkene mit 2 bis 8 Kohlenstoffatomen, wie beispielsweise Ethylen, Propylen, Isomere des Butens und Octens, oder Cycloalkane mit 5 bis 7 Kohlenstoffatomen, wie beispielsweise Cyclopenten, Cyclohexen und Cyclohepten, eingesetzt werden. Weitere lösliche Platin-Katalysatoren sind beispielsweise der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, beispielsweise (Ph₃P)₂PtCl₂. Besonders bevorzugt sind Komplexe des Platins mit Vinylsiloxanen, wie beispielsweise sym-Divinyltetramethyldisiloxan.

Die Menge des eingesetzten Hydrosilylierungskatalysators (E) richtet sich nach der gewünschten Vernetzungsgeschwindigkeit sowie ökonomischen Gesichtpunkten. Üblicherweise werden pro 100 Gew.-Teile Diorganopolysiloxane (A) vorzugsweise 1 x 10⁻⁵ bis 5 x 10⁻² Gew.-Teile, insbesondere 1 x 10⁻⁴ bis 1 x 10⁻² Gew.-Teile Platin-Katalysatoren, berechnet als Platin-Metall, eingesetzt.

Die selbsthaftenden additionsvernetzenden Siliconzusammensetzungen können gegebenenfalls weitere Bestandteile, wie beispielsweise Füllstoffe (F), Inhibitoren (G) sowie weitere Zusatzstoffe (H) wie beispielsweise Stabilisatoren, Pigmente und Katalysatoren enthalten.

Um eine ausreichend hohe mechanische Festigkeit des vernetzten Siliconkautschuks zu erzielen, ist es bevorzugt, aktiv verstärkende Füllstoffe (F) als Bestandteil in die additionsvernetzenden Siliconzusammensetzungen einzuarbeiten. Als aktiv verstärkende Füllstoffe (F) werden vor allem gefällte und pyrogene Kieselsäuren, sowie Gemische derselben verwendet. Die spezifische Oberfläche dieser aktiv verstärkenden Füllstoffe sollte mindestens 50 m²/g betragen oder vorzugsweise im Bereich von 100 bis 400 m²/g gemäß der Bestimmung nach der BET-Methode liegen. Derartige aktiv verstärkende Füllstoffe sind auf dem Gebiet der Siliconkautschuke sehr gut bekannte Materialien.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (F) liegt im Bereich von 0 bis 70 Gew.-%, vorzugsweise bei 0 bis 50 Gew.-%.

Die erfindungsgemäße Siliconkautschukmasse kann wahlweise als Bestandteil weitere Zusätze (H) zu einem Anteil von bis zu 70 Gew.-%, vorzugsweise 0,0001 bis 40 Gew.-%, enthalten. Diese Zusätze können beispielsweise inaktive Füllstoffe, Quarz, Talk, harzartige Polyorganosiloxane, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Aktivkohle, Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie beispielsweise Glasfasern, Kunststofffasern, Kunststoffpulver, Farbstoffe, Pigmente usw.

Weiterhin können Inhibitoren (G) als weiterer Zusatz enthalten sein, die der gezielten Einstellung der Verarbeitungszeit, Anspringtemperatur und Vernetzungsgeschwindigkeit der erfindungsgemäßen Massen dienen. Diese Inhibitoren (G) sind auf dem Gebiet der additionsvernetzenden Massen ebenfalls gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie beispielsweise 1,3,5,7-Tetravinyltetramethyltetracyclosiloxan, niedermolekulare Siliconöle enthaltend (CH₃) (CHR=CH)SiO_{2/2}-Gruppen und gegebenenfalls R₂(CHR=CH)SiO_{1/2}-Endgruppen, wie beispielsweise Divinyltetramethyldisiloxan, Tetravinyldimethyldisiloxan, Trialkylcyanurate, Alkylmaleate, wie beispielsweise Diallylmaleate, Dimethylmaleat und Diethylmaleat, Alkylfumarate, wie beispielsweise Diallylfumarat und Diethylfumarat, organische Hydroperoxide, wie beispielsweise Cumolhydroperoxid, *tert*.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitoren (H) hängt von ihrer chemischen Struktur ab, so dass sie individuell bestimmt werden muss.

Der Gehalt an Inhibitoren in den erfindungsgemäßen Massen beträgt vorzugsweise 0 bis 50.000 ppm, besonders bevorzugt 20 bis 2.000 ppm, insbesondere 100 bis 1.000 ppm.

Optional können weitere Bestandteile (I), die in herkömmlichen selbsthaftenden additionsvernetzenden Sliconkautschukmassen eingesetzt werden, zugesetzt werden. Vorzugsweise handelt es sich hierbei um Organopolysiloxan-Verbindungen. Noch bevorzugter sind cyclische oder lineare Organopolysiloxan-Verbindungen mit mindestens einer SiH-Gruppe und mindestens einer Alkoxysilyl- und/oder Glycidylgruppe pro Molekül. Solche Verbindungen sind beispielsweise in US 5,312,855 beschrieben, deren diesbezüglicher Inhalt Gegenstand der vorliegenden Offenbarung sein soll.

Des Weiteren werden in einer bevorzugten Ausführungsform den erfindungsgemäßen additionsvernetzenden Siliconzusammensetzungen Epoxygruppen und hydrolysierbare Gruppen aufweisende Organosiliciumverbindungen der allgemeinen Formel (VII)

**R**^{**7**} _{**g**}**R**^{**8**} _{**h**}**R**^{**9**} _{**i**}**SiO**_{**(4-g-h-i)/2**} (VII),

deren Teilhydrolysate oder Gemische davon, wobei
- **R**^{**7**}: einen Wasserstoff-, Hydroxyl- oder einen gegebenenfalls halogen- oder cyanosubstituierten, gegebenenfalls O-, N-, S-, oder P-Atome enthaltenden gesättigten monovalenten Kohlenwasserstoffrest mit 1 bis 20 Kohlenstoffatomen,
- **R**^{**8**}: einen mindestens eine Epoxygruppe, gegebenenfalls halogensubstituierte, gegebenenfalls O-, N-, S-, oder P-Atome enthaltenden monovalenten Kohlenwasserstoffrest mit 2 bis 20 Kohlenstoffatomen,
- **R**^{**9**}: einen über eine Si-O-C-, Si-O-N- oder Si-N-Verknüpfung an Si gebundenen hydrolysierbaren monovalenten gegebenenfalls halogensubstituierten, gegebenenfalls O-, N-, S-, oder P-Atome enthaltenden Kohlenwasserstoffrest mit 1 bis 20 Kohlenstoffatomen,
- **g**: eine Zahl von 0 bis 4,
- **h**: eine Zahl größer 0 und kleiner 4 und
- **i**: eine Zahl größer 0 und kleiner 4 bedeuten
mit der Maßgabe, dass die Summe, (h + i) größer 0 und maximal 4 sowie die Summe (**g** + **h** + **i**) maximal 4 ist,
zugesetzt.

Beispiele für Kohlenwasserstoffreste **R**^{**7**} sind Alkylreste, wie beispielsweise Methyl-, Ethyl-, n-Propyl-, Isopropyl-, tert.-Butyl-, n-Pentyl-, *iso*-Pentyl-, *neo*-Pentyl-, *tert*.-Pentyl-, n-Octyl-, 2-Ethylhexyl-, 2,2,4-Trimethylpentyl-, n-Nonyl- und Octadecylrest, Cycloalkylreste, wie beispielsweise Cyclopentyl-, Cyclohexyl-, Cycloheptyl-, Norbornyl-, Adamantylethyl- oder Bornylrest, Arylreste, wie beispielsweise Phenyl-, Ethylphenyl-, Tolyl-, Xylyl-, Mesityl- oder Naphthylrest, Aralkylreste, wie beispielsweise Benzyl-, Phenylethyl- oder Phenylpropylres, Alkenyl- oder Alkinylreste, wie beispielsweise Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest, Cycloalkenylreste, wie beispielsweise Cyclopentenyl-, Cyclohexenyl-, 3-Cyclohexenylethyl-, 5-Bicycloheptenyl-, Norbornenyl-, 4-Cyclooctenyl- oder Cyclooctadienylrest, Aralkenylreste, wie beispielsweise Phenylethenyl- und Phenylethinyl-, sowie halogensubstituierte oder Heteroatome enthaltende Derivate der voranstehenden Reste, wie beispielsweise 3-Chlorpropyl-, 3-Brompropyl-, Decafluoro-1,1,2,2-tetrahydrooctyl-, (p-Chlormethyl)phenyl-, (p-Chlormethyl)phenethyl-, Hydroxymethyl-, Hydroxyethyl-, Hydroxypropyl-, Hydroxybutyl, 2-Bromvinyl-, 2-Allyloxymethyl-, Acetyl-, Acetoxymethyl-, Acetoxyethyl-, Acetoxypropyl-, 3-Phenoxypropyl-, Benzoyloxypropyl-, Mercaptopropyl-, Cyanoethyl-, Cyanopropyl-, 3-Cyanobutyl-, 3-Isocyanatopropyl-, 2-(Carbomethoxy)ethyl-, 10-(Carbomethoxy)decyl-, 2-(Carboxymethylthio)ethyl-, 3-Carboxypropyl-, Aminomethyl-, Aminoethyl-, Aminopropyl-, Aminohexyl-, Aminoethylaminopropyl-, 3-(N-Allylamino)propyl-, (Aminoethylaminomethyl)phenethyl-, m-Aminophenyl-, 3-(m-Aminophenoxy)propyl-, 3-Acryloxypropyl-, 3-Acryloxy-2-hydroxypropyl-, 4-(Acryloxymethyl)phenethyl-, Methacryloxymethyl-, Methacryloxyethyl- oder Methacryloxypropylrest. Bevorzugte Reste **R**^{**7**} sind Methyl-, Ethyl-, Propyl-, Butyl-, Octyl-, Vinyl-, Allyl-, Phenyl-, 3,3,3-Trifluorpropyl- und Cyanopropylrest. Besonders bevorzugte Reste **R**^{**7**} sind Methyl-, Vinyl- und Phenylrest.

Beispiele für die Reste **R**^{**8**} sind Epoxyethyl-, 2,3-Epoxypropyl-, 3,4-Epoxybutyl-, 5,6-Epoxyhexyl-, 9,10-Epoxydecyl-, Glycidyloxy-, 3-Glycidyloxypropyl-, Glycidyloxyisobutyl-, 2-Methylglycidyloxypropyl-, 3-Phenylglycidyloxypropyl-, Glycidyloxyphenylnonyl-, Glycidyloxybenzylethyl-, 3,4-Epoxycyclohexyl-, 2-(3,4-Epoxycyclohexyl)ethyl-, 3-(3,4-Epoxycyclohexyl)propyl-, 1,4-Epoxycyclohexyl- oder 2-(1,4-Epoxycyclohexyl)ethylrest. Bevorzugte Reste **R**^{**8**} sind 3,4-Epoxycyclohexyl-,3-(3,4-Epoxycyclohexyl)propyl- und Glycidoxypropylrest. Vorzugsweise weist Rest **R**^{**8**} 2 bis 10 Kohlenstoffatome auf. Der besonders bevorzugte Rest **R**^{**8**} ist der Glycidoxypropylrest.

Beispiele für die Reste **R**^{**9**} sind über eine Si-O-C-, Si-O-N- oder Si-N-Verknüpfung an Si gebundenen hydrolysierbare, monovalente gegebenenfalls mit Halogen substituierte Kohlenwasserstoffreste mit 1 bis 20 Kohlenstoffatomen, in denen einzelne Kohlenstoffatome durch O-, N-, S-, oder P-Atome ersetzt sein können.

Bevorzugte Beispiele für die Reste **R**^{**9**} sind:
a) Alkoxy-, Enoxy- oder Aryloxygruppen der allgemeinen Formel - OR¹⁰, wie beispielsweise Methoxy-, Ethoxy-, n-Propoxy-, isoPropoxy-, n-Butoxy-, *sec.*-Butoxy-, *tert.*-Butoxy-, 2-Ethylbutoxy-, 2-Ethylhexoxy-, Vinyloxy-, Allyloxy-, Isopropenyloxy-, Cyclobutenyloxy-, Cyclohexenyloxy-, 1,3-Butadienyloxy-, Propargyloxy-, Phenoxy-, Benzyloxy- oder m,p-Vinylbenzyloxyrest;
b) Acyloxygruppen der allgemeinen Formel -OCOR¹⁰, wie beispielsweise Formyloxy-, Acetoxy-, 2-Ethylhexanoxy-, Acryloxy-, Methacryloxy-, Benzoyloxy- oder Norbornylacetoxyrest;
c) Aminogruppen der allgemeinen Formel -NH₂, -NHR¹⁰ oder -NR¹⁰₂, wie beispielsweise Dimethylamino-, Diisopropylamino-, Allylamino-, n-Butylamino-, sec.-Butylamino- oder Cyclohexylaminorest;
d) Oximgruppen der allgemeinen Formel -ON=CH₂, -ON=CHR¹⁰ oder -ON=CR¹⁰₂, wie beispielsweise Methylethylketoxim-, Methylisobutylketoxim-, Methyl-n-amylketoxim- oder Dimethylketoximrest;
e) Amidgruppen der allgemeinen Formel -NH-C(=O)-R¹⁰ oder -NR¹⁰⁻C(=O)-R¹⁰, wie beispielsweise N-Methylbenzamido- oder N-Methylacetamidorest;
f) Aminoxygruppen der allgemeinen Formel -ONH₂, -ONHR¹⁰ oder -ONR¹⁰₂, wie beispielsweise Hydroxylaminorest; oder
g) Halogensubstituierte oder Heteroatome enthaltende oder komplexer zusammengesetzte Derivate der voranstehend genannten Reste, wie beispielsweise p-Aminophenoxy-, 2-Methoxyethoxy-, 1-Methoxy-2-propoxy-, 1-Methoxyisopropenyloxy-, Methoxyethoxyethoxy-, 1-Methoxy-2-methylpropenyloxy-, Acryloxymethoxy-, Methacryloxy(polyethylenoxy)-, Furyloxy-, N-Vinylformamidorest sowie -O-Ph-C(=O)-Ph, -O-C(CF₃)=CH-C(=O)-CF₃, -O-C(CH₃)=CH-C(=O)-CH₃, -O-C(CH₃)₂-CH=CH₂, -NH-C(=O)-CH₃, -O-C(=O)-CH₂Br, -O-C(=O)-CF₃, -O-C(=O)-C≡CH oder -O-CH₂₋C(=O)-O-Si(CH₃)₃.

Die zusätzlichen Bestandteile (I) werden dabei vorzugsweise in Mengen von 0 bis 5 Gew.-% , bevorzugt 0 bis 1 Gew.-%, besonders bevorzugt 0 bis 0,5 Gew.-% eingesetzt. Der Zusatz dieser Verbindungen kann eine weitere Verbesserung der Haftung an verschiedenen Metallen und organischen Kunststoffen, sowie ein Ausweitung der Palette an Materialien, auf welchen die erfindungsgemäße Zusammensetzung haftet, bewirken.

Bevorzugt sind erfindungsgemäße additionsvernetzende Siliconzusammensetzungen, dadurch gekennzeichnet, dass die Zusammensetzung aus zwei Komponenten (i) und (ii) besteht, wobei die Komponente (i) die Bestandteile (A), (B) und (D) sowie gegebenenfalls (C) und die Komponente (ii) die Bestandteile (A) und gegebenenfalls (C) oder (D) enthält, mit der Maßgabe, dass (C) nicht in beiden Komponenten gleichzeitig, aber zumindest in einem der Komponenten (i) oder (ii) enthalten sein muss.

Die Compoundierung der selbsthaftenden additionsvernetzenden Siliconzusammensetzungen erfolgt durch Mischen Komponenten (A), (B), (C), (D) und (E) sowie gegebenenfalls (F), (H) oder (G) in beliebiger Reihenfolge.

Die Vernetzung der selbsthaftenden additionsvernetzenden Siliconzusammensetzungen erfolgt vorzugsweise durch Erwärmen, vorzugsweise bei 30 bis 250°C, bevorzugt bei mindestens 50°C, insbesondere bei mindestens 100°C, bevorzugt bei höchstens 200°C, insbesondere bei höchstens 180°C.

Gegenstand der Erfindung sind weiter die additionsvernetzten Siliconelastomere auf der Grundlage der erfindungsgemäßen Zusammensetzung enthaltend die Komponenten (A), (B), (C), (D) und (E).

Gegenstand der Erfindung ist weiter ein Verfahren zur Herstellung der additionsvernetzten Siliconelastomere, wobei die Komponenten(A), (B), (C), (D) und (E) vermischt werden.

Gegenstand der Erfindung ist weiterhin ein Verfahren zum Verbinden von zwei Substraten mittels der additionsvernetzenden Siliconelastomere, wobei die erfindungsgemäße Zusammensetzung auf ein Substrat aufgebracht und vorzugsweise auf 30 bis 250°C erwärmt wird.

Durch Vernetzen der erfindungsgemäßen additionsvernetzenden Siliconzusammensetzungen auf einem Substrat oder zwischen zumindest zwei Substraten können die additionsvernetzenden Siliconzusammensetzungen mit den Substraten verbunden werden, indem die additionsvernetzende Siliconzusammensetzungen auf das Substrat aufgebracht und anschließend vorzugsweise durch Erwärmen zu einem Verbundmaterial vernetzt werden.

Die selbsthaftenden additionsvernetzenden Siliconzusammensetzungen können insbesondere überall dort mit Vorteil eingesetzt werden, wo eine gute Haftfestigkeit zwischen dem additionsvernetzten Siliconelastomer und einem Substrat, vorzugsweise bestehend aus organischen Kunststoffen, Metallen oder Gläsern, erwünscht wird. Das Substrat kann als Formteil, Folie oder Beschichtung vorliegen.

Die selbsthaftenden additionsvernetzenden Siliconzusammensetzungen eignen sich zur Herstellung von Verbundmaterial durch Beschichten, Verkleben, Vergießen und zur Herstellung von Formartikeln. Insbesondere eignen sich die selbsthaftenden additionsvernetzenden Siliconzusammensetzungen zum Verguss und zum Verkleben elektrischer und elektronischer Bauteile sowie zur Herstellung von Verbundformteilen. Unter Verbundformteilen wird hier ein einheitlicher Formartikel aus einem Verbundmaterial verstanden, der aus einem aus den Siliconzusammensetzungen hergestelltem Siliconelastomerteil und mindestens einem Substrat so zusammengesetzt ist, dass zwischen beiden Teilen eine feste, dauerhafte Verbindung besteht. Vorzugsweise erfolgt die Herstellung eines solchen Verbundformteiles, indem ein organischer Kunststoff zu einem Formartikel verarbeitet wird und anschließend die erfindungsgemäße Siliconzusammensetzungen mit diesem Formteil in Verbindung gebracht und vernetzt werden, was beispielsweise im Spritzgussverfahren, mittels Extrusion oder im sogenannten press-moulding-Verfahren erfolgen kann. Verbundmaterialien und insbesondere Verbundformteile können in vielfältigsten Anwendungsbereichen zum Einsatz kommen, beispielsweise in der Elektronik-, Haushaltgeräte-, Gebrauchsgüter-, Bau- und Automobilindustrie, in der Medizintechnik, der Sport- und Freizeitartikelherstellung etc.

Die hervorragende Haftung bei den selbsthaftenden additionsvernetzenden Siliconzusammensetzungen entsteht durch das Zusammenwirken der vier essentiellen Bestandteile (A), (B) (Organohydrogenpolysiloxan) (C) und (D) (Haftvermittler).

In der vorstehenden Beschreibung nehmen die Buchstaben jeweils unanhängig voneinander ihre Bedeutung an.

In den nachfolgenden Beispielen sind, falls jeweils nicht anders angegeben, alle Drücke Normaldruck, alle Temperaturen 20°C und alle Teile Gewichtsteile (Gew.-Teile).

Für die Zusammensetzungen der Beispiele 1 bis sowie der Vergleichsbeispiele 1 bis 3 wurden nachfolgend die Grundmassen (GM1) und GM2), Organohydrogenpolysiloxan (B1) und (B2) sowie Haftvermittler (C) und (D) als Bestandteile verwendet.

### Grundmasse 1 (GM1)

In einem Doppelschaufelkneter mit Sigma-Knethaken (Werner & Pfleider) wurden 255 Teile eines Vinyldimethylsiloxy-terminierten Polydimethylsiloxans mit einer Viskosität von 20 Pas vorgelegt, auf 150°C aufgeheizt und mit 180 Teilen einer hydrophoben pyrogenen Kieselsäure mit einer spezifischen Oberfläche nach BET von 300 m²/g und einem Kohlenstoffgehalt von 3,95 Gew.-%, versetzt. Es entstand eine hochviskose Masse, die anschließend mit 165 Masseteilen des oben genannten Polydimethylsiloxans verdünnt wurde. Durch Kneten unter Vakuum (10 mbar) bei 150°C wurden während einer Stunde flüchtige Bestandteile entfernt. 100 Teile dieser Mischung wurden auf der Walze bei einer Temperatur von 25°C mit 0,05 Teilen 1-Ehinyl-1-cyclohexanol als Inhibitors zur Verlängerung der Härtungszeit bei Raumtemperatur und 10 ppm Platin (als Platin-Divinyltetramethyldisiloxan-Komplex in Vinyl-terminiertem Polydimethylsiloxan; erhältlich bei ABCR GmbH & Co, Deutschland) zu einer homogenen Masse vermischt.

### Grundmasse 2 (GM2)

589,4 Teile eines Vinyldimethylsiloxy-terminierten Polydimethylsiloxans mit einer Brabender-Plastizität von 630 mkp entsprechend einer mittleren Molmasse von ca. 500.000 g/mol wurden mit 252,6 Teile einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Doppelschaufelkneter mit Sigma-Knethaken (Werner & Pfleider) zu einer homogenen Masse vermischt. 500 g der so erhaltenen Grundmasse wurden auf einer Walze bei einer Temperatur von 20°C mit 0,15 Teile 1-Ethinyl-1-cyclohexanol als Inhibitor und 5 ppm Platin (als Platin-Divinyltetramethyldisiloxan-Komplex in Vinyl-terminiertem Polydimethylsiloxan; erhältlich bei ABCR GmbH & Co, Deutschland) zu einer homogenen Masse vermischt.

### polyorganohydrogensiloxan 1 (B1)

In einem Rührwerk werden 5,0 kg eines Trimethylsiloxy-endständigen Polymethylhydrogensiloxanes, (CH₃)₃Si-(OSiHCH₃)ₙ-O-Si(CH₃)₃, das gemäß ²⁹Si-NMR eine zahlenmittlere Kettenlänge von n=53 besitzt, und 5,0 kg eines Trimethylsiloxy-endständigen Siloxan-Copolymers, bestehend aus Dimethylsiloxy- und Methylphenylsiloxy-Einheiten im Molverhältnis 15,2 : 21,8 und einer bei 25°C gemessenen Viskosität von 0,1 Pas , vorgelegt. Unter fortwährendem Rühren werden bei Raumtemperatur 1,8 g Phosphornitrilchlorid, hergestellt gemäß US 4,203,913, zugegeben. Nach Anlegen eines Vakuums von < 20 mbar wird 5 min gerührt und anschließend das Vakuum mit Stickstoff gebrochen. Anschließend wird 2 Stunden bei einer Temperatur von 100°C gerührt. Man gibt 14 g Hexamethyldisilazan zu und rührt weitere 15 Minuten. Abschließend wird ein Vakuum von < 10 mbar angelegt, die Mischung unter fortwährendem Rühren 1 Stunde bei 100°C von flüchtigen Bestandteilen befreit, das Vakuum mit Stickstoff gebrochen, auf Raumtemperatur abgekühlt und das Reaktionsprodukt filtriert. Man erhält ein Trimethylsiloxy-endständiges Polyorganohydrogensiloxan, das aus -O-Si(CH₃)₂-, -O-SiH(CH₃)- und -O-Si(CH₃)Ph-Einheiten im Molverhältnis 15,2 : 63,0 : 21,8 zusammengesetzt ist, und bei 25°C eine Viskosität von 32,1 mm²/s aufweist. Das Produkt enthält durchschnittlich 17 Si-H-Gruppen je Molekül.

### polyorganohydrogensiloxan 2 (B2)

Hierbei handelt es sich um ein Trimethylsiloxy-endständiges Polyorganohydrogensiloxan, welches durchschnittlich 34 -O-SiH(CH₃)- Einheiten je Molekül enthält. Die Herstellung erfolgt gemäß dem Stand der Technik.

### Haftvermittler 1 (C)

Es handelt sich um 2,2-Bis(4-allyloxyphenyl)propan. Die Herstellung der Verbindung erfolgt gemäß Sorrell, T.N., Yuan, H., *J. Org. Chem.* **62,** (1997) 1899-1902.

### Haftvermittler 2 (D)

Es handelt sich hierbei um ein α,ω-Hydrogendimethylsiloxypolydimethylsiloxan, welches laut ²⁹Si-NMR-Spektrumm im Mittel 10 Dimethylsiloxy-Einheiten aufweist. Die Herstellung erfolgt gemäß dem Stand der Technik.

### Beispiele

Die Grundmasse (GM) wurde mit Polyorganohydrogensiloxan (B1, B2), Haftvermittler (C) und Haftvermittler (D) homogen vermischt und anschließend unter Vakuum bei Raumtemperatur entgast. Die Einsatzmengen der einzelnen Komponenten in der jeweiligen Mischung sind in Tabelle 1 als Gewichtsteile aufgeführt.

Die erhaltenen Siliconkautschukmischungen wurden Haftungstests unterworfen.

### Charakterisierung der Haftung der Zusammensetzungen gemäß Beispiel 1 bis 3 und Vergleichsbeispiel 1 bis 3

In eine Edelstahlpressform wird ein Substratstreifen der Abmessungen 60 x 25 x 2 mm eingelegt und die Form mit der zu testenden additionsvernetzenden Siliconelastomermasse gefüllt. Die Pressvulkanisation erfolgt während 3 Minuten bei einer Temperatur von 120°C und einer Druckkraft von 30 to. Anschließend wird das Laminat 1 Stunde bei 100°C im Umlufttrockenschrank getempert. Nach Entnahme des Laminates aus Substratstreifen und Siliconelastomerstreifen und einer Lagerung von 3 Tagen wird der starre Substratkörper fest eingespannt und die maximale Trennkraft bestimmt, die notwendig ist, den anhaftenden Siliconelastomerstreifen im Schälversuch abzulösen. Die Bestimmung der Trennkraft erfolgt gemäß DIN 53531 (mit folgenden Besonderheiten: die Dicke der Trägerplatte beträgt 2 mm und die Dicke des Elastomers über der Trägerplatte beträgt 4 mm) und wird in N/mm angegeben. Je Beispiel werden 5 Laminate gemessen, die Trennkraft als Mittelwert bestimmt und der Anteil an kohäsivem Versagen in Prozent ermittelt. Kohäsives Versagen von 0% bedeutet, dass das Siliconelastomer vollständig und rückstandsfrei von der Substartoberfläche abgelöst wurde. Kohäsives Versagen von 100% bedeutet, dass die Delaminierung ausschließlich durch Risswachstum innerhalb des Siliconelastomers erfolgte.

### Substrate

Die Haftung der erfindungsgemäßen sowie nicht erfindungsgemäßen additionsvernetzten Siliconelastomere wurde auf Polycarbonat (PC) [Makrolon® (Bayer AG) und LEXAN® (GE Plastics)] getestet. Des weiteren wurden sämtliche Mischungen noch auf folgenden Substraten getestet, wobei in allen Fällen, mit Ausnahme von Vergleichsversuch 3 eine gute bis sehr gute Haftung mit zumeist kohäsivem Versagen erzielt wurde: Polybutylenterephthalat (PBT), wie beispielsweise Ultradur® (BASF AG; 30% Glasfaser (GF)), Pocan® B3235 (Bayer AG) und Valox® (GE Platics), Polyamide, wie beispielsweise Durethan® BKV30 (Bayer AG; 30% GF), Grilamid TR 55 (EMS-Chemie GmbH) und Ultramid (BASF) und Aluminium (Industriequalität; nicht grundiert).

**Tabelle 1: Beispiele, Rezepturen, Abrissspannung in [N/mm] und Anteil kohäsives Versagen in [%], Kunststoff: Lexan**

| | GM 1 | GM 2 | B 1 | B 2 | C | D | Trockenlagerung PC¹ | | Nasslagerung PC¹ | |
|---|---|---|---|---|---|---|---|---|---|---|
| | | | | | | | [N/mm] | [%] | [N/mm] | [%] |
| Vergleichsbeispiel 1 | 100 | - | 3,2 | - | - | - | -² | -² | -² | -² |
| Vergleichsbeispiel 2 | 100 | - | 3,2 - | | 1,7 | - | 12,4 | 100 | -² | -² |
| Vergleichsbeispiel 3 | 100 | - | - | 0,7 | 1,7 | - | 8,8 | 80 | -² | -² |
| Beispiel 1 | 100 | - | 3,2 - | | 1,7 | 1,0 | 14,3 | 100 | 11,0 | 100 |
| Beispiel 2 | 100 | - | - | 0,7 | 1,7 | 1,0 | 9,5 | 100 | 7,2 | 60 |
| Beispiel 3 | - | 100 | 3,5 - | | 2,0 | 1,4 | 12,5 | 100 | 9,6 | 80 |

| | | | | | | | | | | |
|---|---|---|---|---|---|---|---|---|---|---|
| ¹ Trockenlagerung PC: der Silicon-Polycabonat-Verbund wird an Luft gelagert; Nasslagerung PC: der Silicon-Polycarbonat-Verbund wird vor der Messung für 24 Stunden in kochendem Wasser gelagert ² keine Haftung | | | | | | | | | | |

Die in Tabelle 1 angegebenen Werte belegen die hohe Haftfestigkeit zwischen dem erfindungsgemäßen additionsvernetzten Siliconelastomer (Beispiele 1, 2 und 3) und Polycarbonat. Wie anhand des Vergleichsbeispiels 1 zu ersehen ist, führt das fehlen der Bestandeitel (C) und (D) nicht zu einer hohen Haftfestigkeit. Wie anhand des Vergleichbeispiels 2 zu ersehen ist, führt auch das alleinige Vorhandensein des Bestandteils (C) nur zu einer guten Haftung bei Trockenlagerung, während bei Nasslagerung die gute Haftung verloren geht. Wie aus den Beispielen 1 und 2 weiterhin ersichtlich ist, werden mit den bevorzugten Vernetzern (B), die Phenylgruppen enthalten, eine im Vergleich zu den Vernetzern ohne Phenylgruppen weiterhin verbesserte Haftung erhalten.

Nur die erfindungsgemäße Verbindung der Bestandteile (C) und (D) führt in allen Fällen zu einer ausreichend guten Haftung.

Dies verdeutlicht die Synergie der haftungsvermittelnden Bestandteile (C) und (D) der erfindungsgemäßen Siliconzusammensetzung.

## Patentansprüche

1. Additionsvernetzende Siliconzusammensetzungen enthaltend
(A) Organopolysiloxane enthaltend Einheiten der allgemeinen Formel (I)
**R**^{**1**} _{**a**}**R**^{**2**} _{**b**}**SiO**_{**(4-a-b)/2**} (I),
wobei
**R**^{**1**} Hydroxylrest oder einen monovalenten, unsubstituierten oder halogensubstituierten Kohlenwasserstoffrest mit 1 bis 20 Kohlenstoffatomen, der frei von aliphatisch ungesättigten Gruppen ist und in dem einzelne Kohlenstoffatome durch O-, N-, S-, oder P-Atome ersetzt sein können,
**R**^{**2**} einen monovalenten, aliphatisch ungesättigten, unsubstituierten oder halogensubstituierten Kohlenwasserstoffrest mit 1 bis 10 Kohlenstoffatomen, in dem einzelne Kohlenstoffatome durch O-, N-, S-, oder P-Atome ersetzt sein können,
**a** 0, 1, 2 oder 3 und
**b** 0, 1, 2 oder 3 bedeuten,
mit der Maßgabe, dass die Summe (**a** + **b**) ≤ 3 ist, pro Molekül durchschnittlich mindestens zwei aliphatisch ungesättigte Reste **R**^{**2**} enthalten sind und dass die bei 25°C bestimmte Viskosität der Organopolysiloxane (A) 0,001 bis 40.000 Pas beträgt,
(B) Organohydrogenpolysiloxane enthaltend Einheiten der allgemeinen Formel (II)
**R**^{**3**}_{**c**}**R**^{**4**}_{**d**}**R**^{**5**}_{**e**}**/**_{**2**}**H**_{**f**}**SiO**_{**(4-c-d-e-f)/2**} (II),
wobei
**R**^{**3**} einen monovalenten aliphatisch gesättigten Kohlenwasserstoffrest mit 1 bis 20 Kohlenstoffatomen,
**R**^{**4**} (a) einen monovalenten, unsubstituierten oder halogensubstituierten Kohlenwasserstoffrest mit 6 bis 15 Kohlenstoffatomen, welcher mindestens einen aromatischen C₆-Ring enthält, oder (b) einen monovalenten, unsubstituierten oder halogensubstituierten, gesättigten Kohlenwasserstoffrest mit 2 bis 20 Kohlenstoffatomen, in dem einzelne Kohlenstoffatome durch O-, N-, S-, oder P-Atome ersetzt sein können,
**R**^{**5**} einen beidseitig Si-gebundenen bivalenten, unsubstituierten oder halogensubstituierten Kohlenwasserstoffrest mit 6 bis 20 Kohlenstoffatomen bedeutet, in dem einzelne Kohlenstoffatome durch O-, N-, S-, oder P-Atome ersetzt sein können,
**c** 0, 1, 2 oder 3,
**d** 0, 1, 2 oder 3,
**e** 0, 1, 2 oder 3 und
**f** 0, 1, 2 oder 3 bedeuten,
mit der Maßgabe, dass die Summe (**c**+**d**+2**e**+**f**) ≤ 3 ist, das Organohydrogenpolysiloxan (B) pro Molekül durchschnittlich mindestens 3 SiH-Gruppen enthält und die bei 25°C bestimmte Viskosität des Organohydrogenpolysiloxans (B) 0,0005 bis 100 Pas beträgt,
(C) zumindest einen Haftvermittler der allgemeinen Formel (III) : 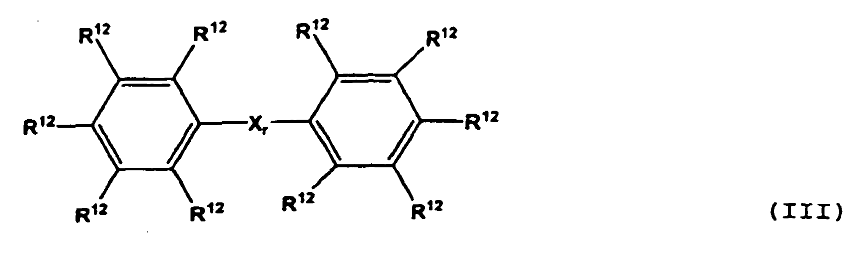 wobei
**R**^{**12**} ein Wasserstoffatom, eine Hydroxylgruppe, ein Halogenatom, eine Alkyl-, Alkenyl-, Alkoxy-, Alkenyloxy- oder Arylgruppe oder eine einwertige organische Gruppe ist, die eine Alkenyl-, Alkoxy-, Glycidyl-, Carbonyl-, Carbonyloxy-, Silyloxy- oder Alkoxysilylgruppe enthält, wobei zumindest einer, der Reste **R**^{**12**} eine Alkenylgruppe oder eine Alkenylgruppe enthaltende, einwertige, organische Gruppe ist, und
**X** -(R¹³-)C(-R¹³)-, -(O=)S(=O)-, -(O=)S-, -C(=O)-, -O-(CH₃-)Si(-CH₃)-O-, -(CH₂)₅- und -O-
worin
**R**^{**13**} ein Wasserstoffatom, ein Halogenatom oder eine substituierte oder unsubstituierte Alkyl-, Aryl-, Alkenyl- oder Alkinylgruppe,
**s** eine positive Zahl von zumindest 2 und
**r** 0 oder 1 bedeuten,
(D) zumindest einen Haftvermittler der folgenden allgemeinen Formel (IV) 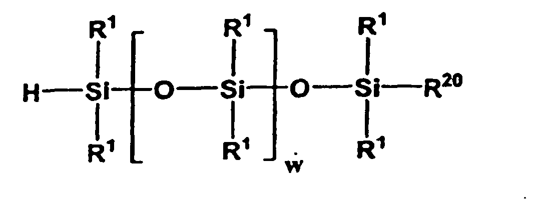 worin
**R**^{**1**} die obenstehende Bedeutung hat, und
**R**^{**20**} einen Hydroxylrest oder ein Wasserstoffatom und
**w** Null oder eine ganze positive Zahl bedeuten,
mit der Maßgabe, dass **w** ≤ 250 ist und die bei 25°C bestimmte Viskosität des Haftvermittlers (D) 0,0005 bis 2000 mPas beträgt,
und
(E) zumindest einen Hydrosilylierungskatalysator.

2. Siliconzusammensetzungen nach Anspruch 1 , **dadurch gekennzeichnet, dass** der Haftvermittler (C) der allgemeinen Formel (III) 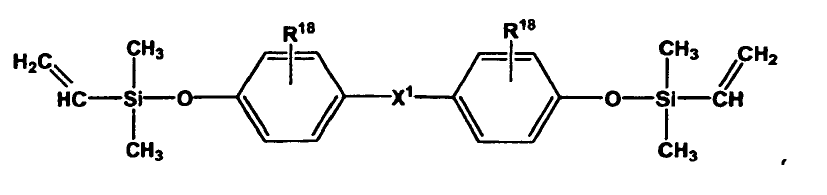 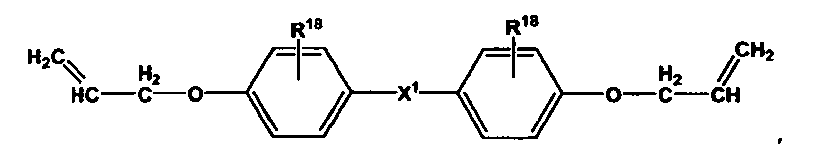 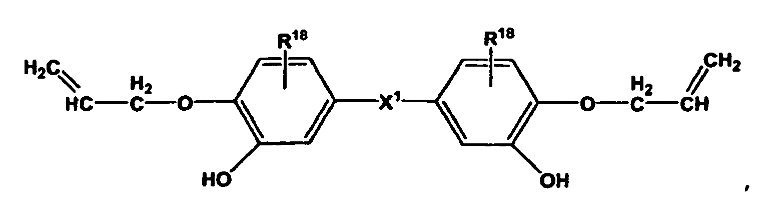 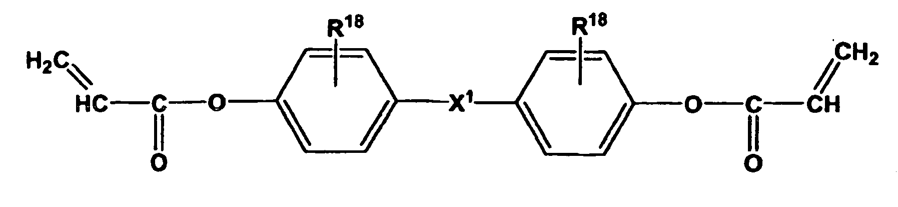 oder 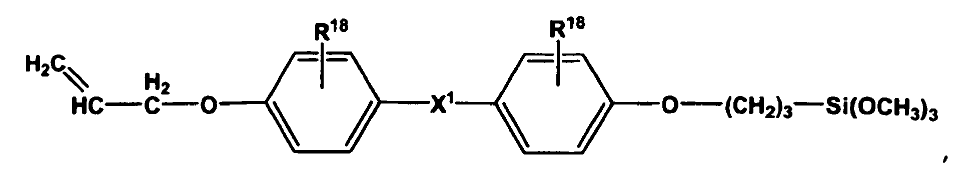 worin
**X**^{**1**} -O-, -CH₂, -(CH₃-)C(-CH₃)- oder -O-(CH₃-)Si(-CH₃)-O-, und
**R**^{**18**} jeweils unabhängig von einander ein Wasserstoffatom, eine Vinylgruppe oder eine Allylgruppe bedeuten,
ist.

3. Siliconzusammensetzungen nach mindestens einem der Ansprüche 1 bis 2, **dadurch gekennzeichnet, dass** diese weiterhin mindestens einen verstärkenden Füllstoffs (F), mindestens einen Inhibitor (G) sowie weitere Zusatzstoffe (H) enthalten kann.

4. Siliconzusammensetzungen nach mindestens einem der Ansprüche 1 bis 3, **dadurch gekennzeichnet, dass** das Organohydrogenpolysiloxan (B) pro Molekül 5 bis 40 SiH-Gruppen enthält und die bei 25°C gemessene Viskosität 0,002 bis 1 Pas beträgt.

5. Siliconzusammensetzungen nach mindestens einem der Ansprüche 1 bis 4, **dadurch gekennzeichnet, dass** das Organohydrogenpolysiloxan (B) Phenylgruppen als Rest **R**^{**4**} enthält.

6. Siliconzusammensetzungen nach mindestens einem der Ansprüche 1 bis 5, **dadurch gekennzeichnet, dass** der Haftvermittler (D) ausgewählt wird aus der Gruppe enthaltend H(CH₃)₂Si-O-(Si(CH₃)₂-O)n-OSi(CH₃)₂H mit n = 5, 6, 8, 10 oder 12, H(CH₃)₂Si-O-(Si(Ph)(CH₃)-O)-(Si(CH₃)₂-O)₅₋OSi(CH₃)₂H und H(CH₃)₂Si-O-(-Si(Ph) (CH₃)-O)₃-(Si(CH₃)₂-O)₈₋OSi(CH₃)₂H.

7. Siliconzusammensetzungen nach mindestens einem der Ansprüche 1 bis 6, **dadurch gekennzeichnet, dass** die Zusammensetzung aus zwei Komponenten (i) und (ii) besteht, wobei die Komponente (i) die Bestandteile (A), (B) und (D) sowie gegebenenfalls (C) und die Komponente (ii) die Bestandteile (A) und gegebenenfalls (C) oder (D) enthält, mit der Maßgabe, dass (C) nicht in beiden Komponenten gleichzeitig, aber zumindest in einem der Komponenten (i) oder (ii) enthalten sein muss.

8. Additionsvernetzte Siliconelastomere erhältlich aus mindestens einer additionsvernetzenden Siliconzusammensetzung nach einem der Ansprüche 1 bis 7.

9. Compoundierung der selbsthaftenden additionsvernetzenden Siliconzusammensetzungen nach mindestens einem der Ansprüche 1 bis 7, **dadurch gekennzeichnet, dass** die Komponenten (A), (B), (C), (D) und (E) sowie gegebenenfalls (F), (H) oder (G) in beliebiger Reihenfolge gemischt werden.

10. Verfahren zur Vernetzung der selbsthaftenden additionsvernetzenden Siliconzusammensetzungen, **dadurch gekennzeichnet, dass** die Vernetzung durch Erwärmung der additionsvernetzenden Siliconzusammensetzungen nach mindestens einem der Ansprüche 1 bis 7 erfolgt.

11. Verfahren zum Verbinden der selbsthaftenden additionsvernetzenden Siliconzusammensetzungen mit mindestens einem Substrat, **dadurch gekennzeichnet, dass** die additionsvernetzenden Siliconzusammensetzungen nach mindestens einem der Ansprüche 1 bis 7 auf ein Substrat aufgebracht und erwärmt wird.

12. Verbundmaterial aus mindestens einer selbsthaftenden additionsvernetzenden Siliconzusammensetzung nach mindestens einem der Ansprüche 1 bis 7 und mindestens einem Substrat.

13. Verwendung der selbsthaftenden additionsvernetzenden Siliconzusammensetzungen nach mindestens einem der Ansprüche 1 bis 5 zur Herstellung von Verbundmaterialien durch Beschichten, Verkleben, Vergießen, zur Herstellung von Formartikeln sowie zum Verguss und zum Verkleben elektrischer und elektronischer Bauteile.

## Claims

1. Addition-crosslinking silicone compositions comprising
(A) organopolysiloxanes comprising units of the general formula (I)
**R**^{**1**} _{**a**}**R**^{**2**} _{**b**}**SiO**_{**(4-a-b)/2**} (I),
where
**R**^{**1**} is hydroxyl radical or a monovalent, unsubstituted or halogen-substituted hydrocarbon radical having 1 to 20 carbon atoms which is free from aliphatically unsaturated groups and in which individual carbon atoms may have been replaced by O, N, S or P atoms,
**R**^{**2**} is a monovalent, aliphatically unsaturated, unsubstituted or halogen-substituted hydrocarbon radical having 1 to 10 carbon atoms in which individual carbon atoms may have been replaced by O, N, S or P atoms,
**a** is 0, 1, 2 or 3, and
**b** is 0, 1, 2 or 3,
with the proviso that the sum (**a** + **b**) is ≤ 3, that per molecule there are on average at least two aliphatically unsaturated radicals R², and that the viscosity of the organopolysiloxanes (A) determined at 25°C is from 0.001 to 40 000 Pas,
(B) organohydropolysiloxanes comprising units of the general formula (II)
**R**^{**3**} _{**c**}**R**^{**4**} _{**d**}**R**^{**5**} _{**e/2**}**H**_{**f**}**SiO**_{**(4-c-d-e-f)/2**} (II),
where
**R**^{**3**} is a monovalent aliphatically saturated hydrocarbon radical having 1 to 20 carbon atoms,
**R**^{**4**} is (a) a monovalent, unsubstituted or halogen-substituted hydrocarbon radical having 6 to 15 carbon atoms which comprises at least one aromatic C₆ ring, or
(b) a monovalent, unsubstituted or halogen-substituted, saturated hydrocarbon radical having 2 to 20 carbon atoms, in which individual carbon atoms may have been replaced by O, N, S or P atoms,
**R**^{**5**} is a divalent, unsubstituted or halogen-substituted hydrocarbon radical having 6 to 20 carbon atoms, in which individual carbon atoms may have been replaced by O, N, S or P atoms, which is Si-bonded on both sides,
**c** is 0, 1, 2 or 3,
**d** is 0, 1, 2 or 3,
**e** is 0, 1, 2 or 3, and
**f** is 0, 1, 2 or 3,
with the proviso that the sum (**c**+**d**+2**e**+**f**) is ≤ 3, that the organohydropolysiloxane (B) contains on average per molecule at least 3 SiH groups, and that the viscosity of the organohydropolysiloxane (B) determined at 25°C is from 0.0005 to 100 Pas,
(C) at least one adhesion promoter of the general formula (III) : 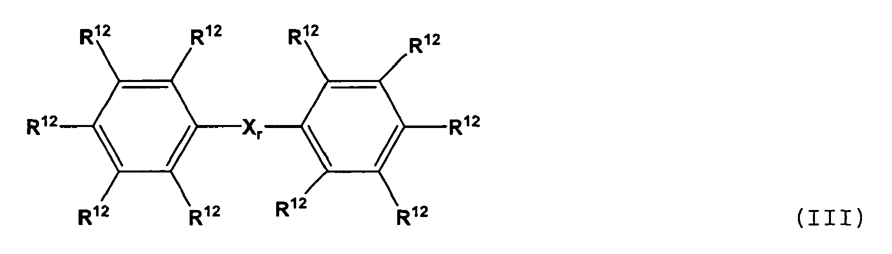 where
**R**^{**12**} is a hydrogen atom, a hydroxyl group, a halogen atom, an alkyl, alkenyl, alkoxy, alkenyloxy or aryl group or a monovalent organic group which contains an alkenyl, alkoxy, glycidyl, carbonyl, carbonyloxy, silyloxy or alkoxysilyl group, at least one of the radicals R¹² being an alkenyl group or a monovalent organic group containing an alkenyl group, and
**X** is -(R¹³-)C(-R¹³)-, -(O=)S(=O)-, -(O=)S-, -C(=O)-, -O-(CH₃-)Si(-CH₃)-O-, -(CH₂)₅- or -O-
in which
**R**^{**13**} is a hydrogen atom, a halogen atom or a substituted or unsubstituted alkyl, aryl, alkenyl or alkynyl group,
**s** is a positive number which is at least 2, and
**r** is 0 or 1,
(D) at least one adhesion promoter of the following general formula (IV) 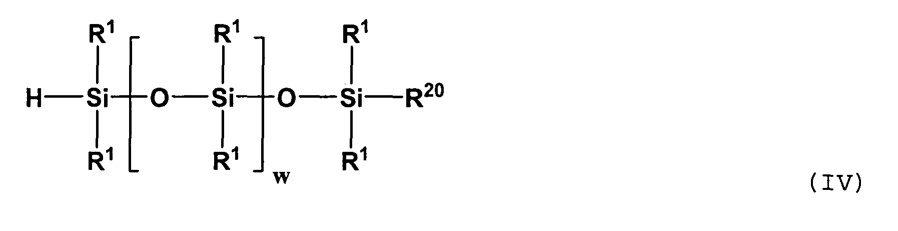 in which
**R**^{**1**} is as defined above,
**R**^{**20**} is a hydroxyl radical or a hydrogen atom, and
**w** is zero or a positive integer,
with the proviso that **w** is ≤ 250 and that the viscosity of the adhesion promoter (D) determined at 25°C is from 0.0005 to 2000 mPas,
and
(E) at least one hydrosilylation catalyst.

2. Silicone compositions according to Claim 1, **characterized in that** the adhesion promoter (C) of the general formula (III) is 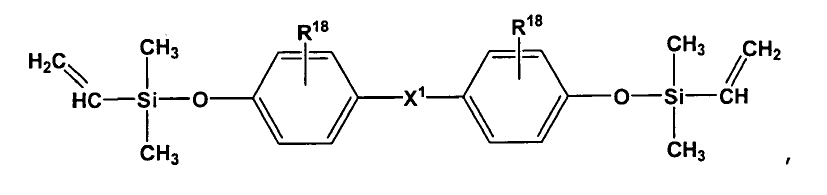 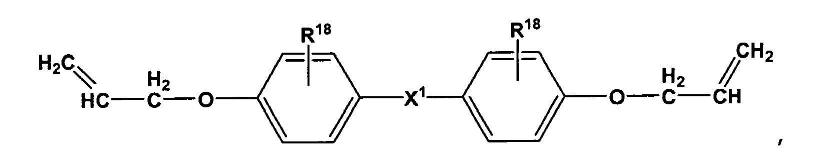 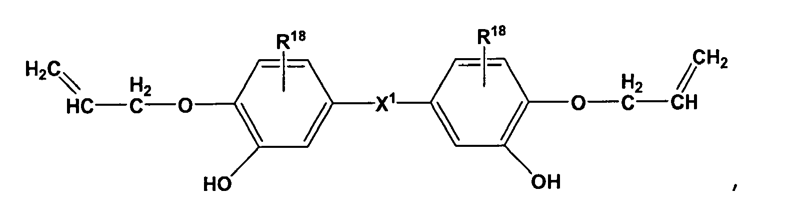 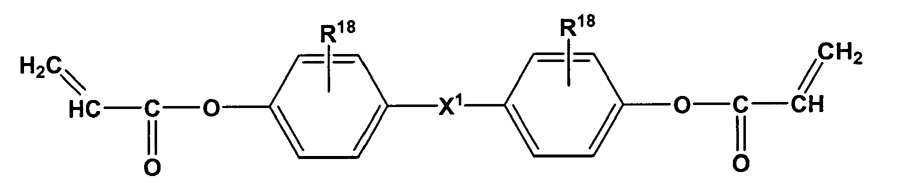 or 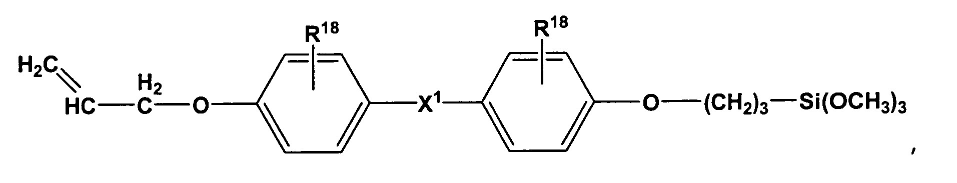 in which
**X**^{**1**} is -O-, -CH₂, -(CH₃-)C(-CH₃)- or -O-(CH₃-)Si(-CH₃)-O-, and
**R**^{**18**} independently at each occurrence is a hydrogen atom, a vinyl group or an allyl group.

3. Silicone compositions according to at least one of Claims 1 to 2, **characterized in that** they possibly further comprise at least one reinforcing filler (F), at least one inhibitor (G), and further additives (H).

4. Silicone compositions according to at least one of Claims 1 to 3, **characterized in that** the organohydropolysiloxane (B) contains from 5 to 40 SiH groups per molecule and the viscosity measured at 25°C is from 0.002 to 1 Pas.

5. Silicone compositions according to at least one of Claims 1 to 4, **characterized in that** the organohydropolysiloxane (B) contains phenyl groups as radical **R**^{**4**}.

6. Silicone compositions according to at least one of Claims 1 to 5, **characterized in that** the adhesion promoter (D) is selected from the group consisting of H(CH₃)₂Si-O-(Si(CH₃)₂₋O)ₙ-OSi(CH₃)₂H with n = 5, 6, 8, 10 or 12, H(CH₃)₂Si-O-(Si(Ph)(CH₃)-O)-(Si(CH₃)₂-O)₅-OSi(CH₃)₂H, and H(CH₃)₂Si-O-(-Si(Ph)(CH₃)-O)₃-(Si(CH₃)₂-O)₈-OSi(CH₃)₂H.

7. Silicone compositions according to at least one of Claims 1 to 7, **characterized in that** the composition is composed of two components (i) and (ii), component (i) comprising the constituents (A), (B), and (D) and also, if desired, (C), and component (ii) comprising the constituents (A) and, if desired, (C) or (D), with the proviso that (C) must not be present in both components simultaneously but must be present at least in one of components (i) and (ii).

8. Addition-crosslinked silicone elastomers obtainable from at least one addition-crosslinking silicone composition according to any one of Claims 1 to 7.

9. Compounding of the self-adhesive addition-crosslinking silicone compositions according to at least one of Claims 1 to 7, **characterized in that** the components (A), (B), (C), (D), and (E) and also, where used, (F), (H) or (G) are mixed in any order.

10. Process for crosslinking the self-adhesive addition-crosslinking silicone compositions, **characterized in that** crosslinking takes place by heating the addition-crosslinking silicone compositions according to at least one of Claims 1 to 7.

11. Method of joining the self-adhesive addition-crosslinking silicone compositions to at least one substrate, **characterized in that** the addition-crosslinking silicone compositions according to at least one of Claims 1 to 7 is applied to a substrate and heated.

12. Composite material comprising at least one self-adhesive addition-crosslinking silicone composition according to at least one of Claims 1 to 7 and at least one substrate.

13. Use of the self-adhesive addition-crosslinking silicone compositions according to at least one of Claims 1 to 5 for producing composite materials by coating, adhesive bonding or casting, for producing mouldings, and for encapsulating and for adhesively bonding electrical and electronic components.

## Revendications

1. Compositions siliconées réticulables par addition, contenant
(A) des organopolysiloxanes contenant des unités de la formule générale (I)
**R**^{**1**} _{**a**}**R**^{**2**} _{**b**}**SiO**_{**(4-a-b)/2**} (I),
dans laquelle
R¹ représente un radical hydroxyle ou un radical hydrocarboné monovalent, non substitué ou substitué par de l'halogène, comportant de 1 à 20 atomes de carbone, qui est exempt de groupes aliphatiques insaturés et dans lequel des atomes de carbone individuels peuvent être remplacés par des atomes de O, N, S ou P,
R² représente un radical hydrocarboné monovalent aliphatique insaturé, non substitué ou substitué par de l'halogène, comportant de 1 à 10 atomes de carbone, dans lequel des atomes de carbone individuels peuvent être remplacés par des atomes de O, N, S ou P,
a vaut 0, 1, 2 ou 3 et
b vaut 0, 1, 2 ou 3,
à la condition que la somme (a + b) soit ≤ 3, qu'il se trouve en moyenne, par molécule, au moins deux radicaux aliphatiques insaturés R² et que la viscosité de l'organopolysiloxane (A), déterminée à 25°C, soit de 0,001 à 40 000 Pa.s,
(B) des organohydrogénopolysiloxanes contenant des unités de la formule générale (II)
**R**^{**3**} _{**c**}**R**^{**4**} _{**d**}**R**^{**5**} _{**e**}**/2H**_{**f**}**SiO**_{**(4-c-d-e-f)/2**} (II)
dans laquelle
R³ représente un radical hydrocarboné aliphatique monovalent saturé comportant de 1 à 20 atomes de carbone,
R⁴ représente (a) un radical hydrocarboné monovalent non substitué ou substitué par de l'halogène, comportant de 6 à 15 atomes de carbone, qui contient au moins un noyau aromatique en C₆, ou (b) un radical hydrocarboné saturé monovalent, non substitué ou substitué par de l'halogène, comportant de 2 à 20 atomes de carbone, et dans lequel des atomes de carbone individuels peuvent être remplacés par des atomes de O, N, S ou P,
R⁵ représente un radical hydrocarboné bivalent à liaison Si des deux côtés, non substitué ou substitué par de l'halogène, comportant de 6 à 20 atomes de carbone, et dans lequel des atomes de carbone individuels peuvent être remplacés par des atomes de O, N, S ou P,
c vaut 0, 1, 2 ou 3,
d vaut 0, 1, 2 ou 3,
e vaut 0, 1, 2 ou 3, et
f vaut 0, 1, 2 ou 3,
à la condition que la somme (c + d + 2e + f) soit ≤ 3, que l'organohydrogénopolysiloxane (B) contienne en moyenne au moins 3 groupes SiH par molécule et que la viscosité de l'organohydrogénopolysiloxane (B), déterminée à 25°C, soit de 0,0005 à 100 Pa.s,
(C) au moins un promoteur d'adhérence de la formule générale (III) 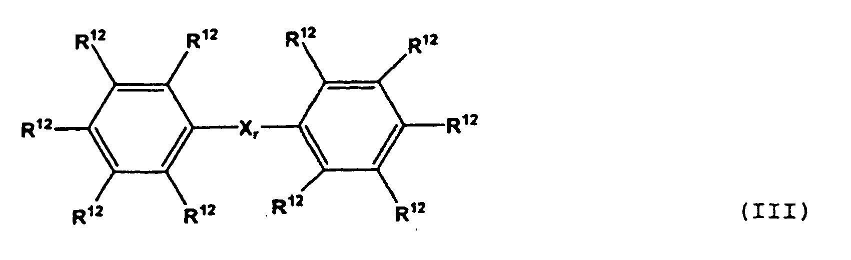 dans laquelle
R¹² représente un atome d'hydrogène, un groupe hydroxyle, un atome d'halogène, ou un radical alkyle, alcényle, alcoxy, alcényloxy ou aryle ou un groupe organique monovalent, qui contient un radical alcényle, alcoxy, glycidyle, carbonyle, carbonyloxy, silyloxy ou alcoxysilyle, au moins l'un des radicaux R¹² étant un radical alcényle ou un groupe organique monovalent contenant des radicaux alcényle, et
X représente -(R¹³-)C(-R¹³)-, - (O=) S (=O)-, -(O=)S-, -C(=O)-, -O-(CH₃-)Si(-CH₃)-O-,-(CH₂)₅- et -O-
avec
R¹³ représentant un atome d'hydrogène, un atome d'halogène ou un radical alkyle, aryle, alcényle ou alcynyle substitué ou non substitué,
s représentant un nombre positif d'au moins 2 et
r ayant une valeur de 0 ou 1,
(D) au moins un promoteur d'adhérence de la formule générale (IV) suivante 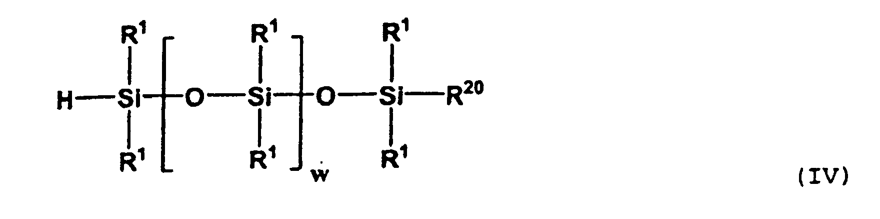 dans laquelle
R¹ a la signification ci-avant et
R²⁰ représente un radical hydroxyle ou un atome d'hydrogène et
w vaut 0 ou est un nombre entier positif,
à la condition que w soit ≤ 250 et que la viscosité du promoteur d'adhérence (D), déterminée à 25°C, soit de 0,0005 à 2000 mPa.s, et
(E) au moins un catalyseur d'hydrosilylation.

2. Compositions siliconées suivant la revendication 1, **caractérisées en ce que** le promoteur d'adhérence (C) est de la formule générale (III) 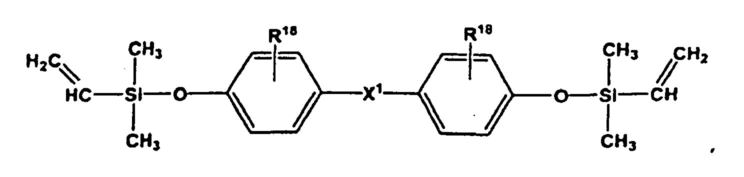 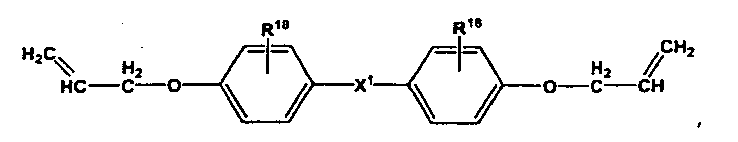 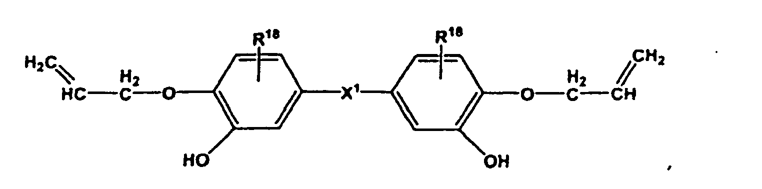 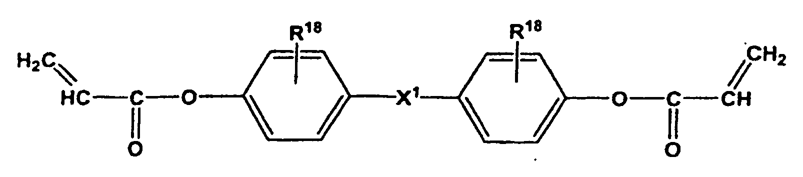 ou 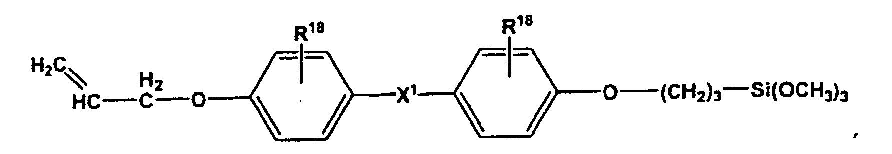 où
X¹ représente -O- , -CH₂, -(CH₃-)C(-CH₃)- ou -O-(CH₃-)Si(-CH₃)-O- et
R¹⁸ représentent à chaque fois indépendamment les uns des autres un atome d'hydrogène, un groupe vinyle ou un groupe allyle.

3. Compositions siliconées suivant au moins la revendication 1 ou 2, **caractérisées en ce qu'**elles peuvent en outre contenir au moins une charge de renforcement (F), au moins un inhibiteur (G) ainsi que d'autres additifs (H).

4. Compositions siliconées suivant au moins l'une quelconque des revendications 1 à 3, **caractérisées en ce que** l'organohydrogénopolysiloxane (B) contient de 5 à 40 unités SiH par molécule et la viscosité, mesurée à 25°C, est de 0,002 à 1 Pa.s.

5. Compositions siliconées suivant au moins l'une quelconque des revendications 1 à 4, **caractérisées en ce que** l'organohydrogénopolysiloxane (B) contient des groupes phényle en tant que radicaux R⁴.

6. Compositions siliconées suivant au moins l'une quelconque des revendications 1 à 5, **caractérisées en ce que** le promoteur d'adhérence (D) est choisi dans le groupe contenant H(CH₃)₂Si-O-(Si(CH₃)₂-O)ₙ-OSi(CH₃)₂H avec n = 5, 6, 8, 10 ou 12, H(CH₃)₂Si-O-(Si(Ph)(CH₃)-O)-(Si(CH₃)₂-O)₅-OSi(CH₃)₂H et H(CH₃)₂Si-O-(-Si(Ph)(CH₃)-O)₃₋(Si(CH₃)₂-O)₈-OSi(CH₃)₂H.

7. Compositions siliconées suivant au moins l'une quelconque des revendications 1 à 6, **caractérisées en ce que** la composition consiste en deux composants (i) et (ii), le composant (i) contenant les constituants (A), (B) et (D) ainsi qu'éventuellement (C), et le composant (ii) contenant les constituants (A) et éventuellement (C) ou (D), à la condition que (C) ne soit pas simultanément contenu dans les deux composants, mais au moins dans l'un des composants (i) ou (ii).

8. Elastomères siliconés réticulés par addition, que l'on peut obtenir à partir d'au moins une composition siliconée réticulable par addition suivant l'une quelconque des revendications 1 à 7.

9. Mélange des compositions siliconées autoadhésives réticulables par addition suivant au moins l'une quelconque des revendications 1 à 7, **caractérisé en ce que** les composants (A), (B), (C), (D) et (E) ainsi qu'éventuellement (F), (H) ou (G) sont mélangés dans n'importe quel ordre.

10. Procédé de réticulation des compositions siliconées autoadhésives réticulables par addition, **caractérisé en ce que** la réticulation a lieu par chauffage des compositions siliconées réticulables par addition suivant au moins l'une quelconque des revendications 1 à 7.

11. Procédé de liaison des compositions siliconées autoadhésives réticulables par addition avec au moins un substrat, **caractérisé en ce que** les compositions siliconées réticulables par addition suivant au moins l'une quelconque des revendications 1 à 7 sont appliquées sur un substrat et chauffées.

12. Matériau composite à base d'au moins une composition siliconée autoadhésive réticulable par addition suivant au moins l'une quelconque des revendications 1 à 7 et d'au moins un substrat.

13. Utilisation des compositions siliconées autoadhésives réticulables par addition suivant au moins l'une quelconque des revendications 1 à 5 pour la préparation de matériaux composites par enduction, collage, coulée, pour la préparation d'articles façonnés, ainsi que pour l'enrobage et le collage de composants électriques et électroniques.
